(19) Europäisches Patentamt
European Patent Office
Office européen des brevets

(11) **EP 4 589 485 A1**

(12) **EUROPEAN PATENT APPLICATION**
published in accordance with Art. 153(4) EPC

(43) Date of publication:
**23.07.2025 Bulletin 2025/30**

(21) Application number: **23865557.5**

(22) Date of filing: **13.09.2023**

(51) International Patent Classification (IPC):
***G06N 10/40*** *(2022.01)* ***G06F 7/38*** *(2006.01)*
***H10N 60/10*** *(2023.01)*

(52) Cooperative Patent Classification (CPC):
**G06F 7/38; G06N 10/40; H10N 60/10**

(86) International application number:
**PCT/JP2023/033341**

(87) International publication number:
**WO 2024/058208 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.09.2022 JP 2022147752**

(71) Applicant: **Japan Science and Technology Agency**
**Kawaguchi-shi, Saitama 332-0012 (JP)**

(72) Inventors:
- **NOGUCHI Atsushi**
**Tokyo 153-8904 (JP)**
- **SHIRAI Shotaro**
**Tokyo 153-8904 (JP)**
- **OKUBO Yuta**
**Tokyo 153-8904 (JP)**
- **NAKAMURA Yasunobu**
**Tokyo 153-8904 (JP)**

(74) Representative: **Noble, Nicholas et al**
**Kilburn & Strode LLP**
**Lacon London**
**84 Theobalds Road**
**London WC1X 8NL (GB)**

(54) **QUANTUM GATE DEVICE, SUPERCONDUCTING QUANTUM GATE DEVICE, QUANTUM COMPUTER, AND QUANTUM GATE OPERATING METHOD**

(57) The quantum gate device 1 comprises a qubit substrate 10 that comprises at least two data qubits, namely a first data qubit 11 and a second data qubit 12, and a coupler qubit 13 disposed between the first data qubit 11 and the second data qubit 12 and a pulse irradiator 20 that irradiates drive pulses to the coupler qubit 13. The pulse irradiator 20 irradiates a first cross-Rabi transition drive pulse defined by the frequency $\omega_c + |\omega_1 - \omega_2|$ and a residual ZZ interaction elimination drive pulse of frequency $\omega_c + |\omega_1 - \omega_2| - \delta$, which is shifted by a predetermined frequency $\delta$ from the first cross-Rabi transition drive pulse. The resonance frequency of the first excited state of the first data qubit 11 is $\omega_1$. The resonance frequency of the first excited state of the second data qubit 12 is $\omega_2$. The resonance frequency of the first excited state of the coupler qubit 13 is $\omega_c$. The predetermined frequency shift $\delta$ is a value that eliminates the residual ZZ interaction between the first data qubit 11 and the second data qubit 12.

FIG. 1

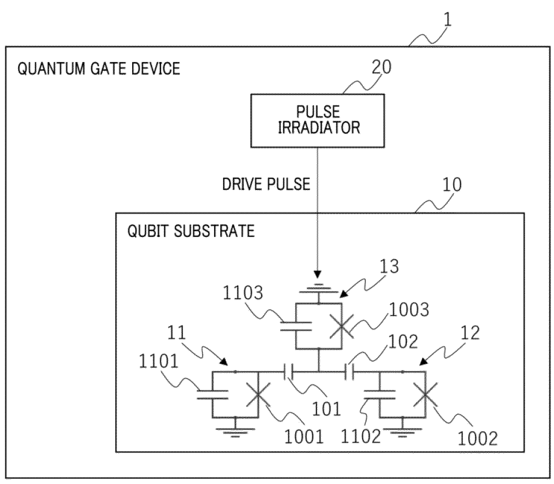


EP 4 589 485 A1

## Description

### TECHNICAL FIELD

This invention relates to a quantum gate device, a superconducting quantum gate device, a quantum computer and a method of quantum gate operation.

### BACKGROUND ART

It is known that operations in quantum computers can be realized by combining a set of quantum gates comprising 1-quantum gate and 2-quantum gate, i.e., a "universal quantum gate set," with the readout elements of individual qubits, e.g., Non Patent Literature 1.

### RELATED-ART LITERATURE

Non Patent Literature 1: " Progress and Applications of Superconducting Quantum Bit Research" Yasunobu Nakamura, Applied Physics Vol. 90, No. 4 (2021) https://www.jstage.jst.go.jp/article/oubutsu/90/4/90_209/_pdf Non Patent Literature 2: "A universal gate for fixed-frequency qubits via a tunable bus ", David C. McKay, etc. Phys. Rev. Applied 6, 064007 (2016) https://arxiv.org/pdf/1604.03076.pdf

### SUMMARY OF INVENTION

### TECHNICAL PROBLEM

Variable interaction is a key matter for constructing a well-controlled superconducting quantum processor. A scheme using fixed-frequency superconducting qubits with high coherence is a strong candidate for this construction. However, in the fixed-frequency scheme, the residual interaction of always-on causes limitation in control accuracy. Usually, 1-quantum gate is operated by inducing Rabi oscillations with microwave pulses that resonate between two levels with a time width of about 10 to 20 ns. In contrast, 2-quantum gate generally requires more time for gate operation than 1-quantum gate and is therefore more susceptible to decoherence. In particular, in 2-quantum gate, due to the coupling between the qubits, there are residual ZZ interactions even during the time when the gate is not operated. This is undesirable because it causes errors that degrade the accuracy of gate control. Therefore, the challenge is how to eliminate the residual ZZ interaction.

One method to remove the residual ZZ interaction is to use DC-SQUIDs to change the resonance frequency of the coupling elements and data qubits, e.g., Non-Patent Literature 2. However, these methods have the problem that the response of the quantum processor to external magnetic flux causes it to be affected by magnetic flux noise and shortens the coherence time.

The present invention was made in view of these problems, and its purpose is to provide a technique for removing residual ZZ interaction and 2-quantum gates operation without the need for external magnetic flux.

### SOLUTION TO PROBLEM

To solve the above problem, a quantum gate device according to one embodiment of the disclosure comprises a qubit substrate that comprises at least two data qubits, namely a first data qubit and a second data qubit, and a coupler qubit disposed between the first data qubit and the second data qubit and a pulse irradiator that irradiates drive pulses to the coupler qubit. The pulse irradiator irradiates a first cross-Rabi transition drive pulse defined by the frequency $\omega_c + |\omega_1-\omega_2|$ and a residual ZZ interaction elimination drive pulse of frequency $\omega_c + |\omega_1-\omega_2| - \delta$, which is shifted by a predetermined frequency $\delta$ from the first cross-Rabi transition drive pulse. The resonance frequency of the first excited state of the first data qubit is $\omega_1$. The resonance frequency of the first excited state of the second data qubit is $\omega_2$. The resonance frequency of the first excited state of the coupler qubit is $\omega_c$. The predetermined frequency shift $\delta$ is a value that eliminates the residual ZZ interaction between the first data qubit and the second data qubit.

According to this embodiment, it is possible to provide a device that realizes the elimination of residual ZZ interactions and 2-quantum gate operation without the need for external magnetic flux.

Another embodiment of the disclosure is also a quantum gate device. This quantum gate device comprises a qubit substrate that comprises at least two data qubits, namely a first data qubit and a second data qubit, and a coupler qubit disposed between the first data qubit and the second data qubit and a pulse irradiator that irradiates drive pulses to the coupler qubit. The pulse irradiator irradiates a second cross-Rabi transition drive pulse defined by the frequency $\omega_c - |\omega_1-\omega_2|$ and a residual ZZ interaction elimination drive pulse of frequency $\omega_c - |\omega_1-\omega_2| - \delta$, which is shifted by a predetermined

frequency $\delta$ from the second cross-Rabi transition drive pulse. The resonance frequency of the first excited state of the first data qubit is $\omega_1$. The resonance frequency of the first excited state of the second data qubit is $\omega_2$. The resonance frequency of the first excited state of the coupler qubit is $\omega_c$. The predetermined frequency shift $\delta$ is a value that eliminates the residual ZZ interaction between the first data qubit and the second data qubit.

According to this embodiment, it is possible to provide a device that realizes the elimination of residual ZZ interactions and 2-quantum gate operation without the need for external magnetic flux.

In one embodiment, the pulse irradiator may irradiate both the first cross-Rabi transition drive pulse and the second cross-Rabi transition drive pulse, and the residual ZZ interaction elimination drive pulse to the coupler qubit.

In one embodiment, the first cross-Rabi transition drive pulse may perform a control phase gate between the first data qubit and the second data qubit.

In one embodiment, the second cross-Rabi transition drive pulse may perform a control phase gate between the first data qubit and the second data qubit.

In one embodiment, the quantum gate device may comprise a capacitor that couples the first data qubit with the second data qubit. In this case, the predetermined frequency shift $\delta$ is a value that eliminates the residual ZZ interaction between the first data qubit and the second data qubit and the cross-resonance between the first data qubit and the second data qubit.

In one embodiment, the qubit substrate may comprise three or more data qubits, a coupler qubit disposed between adjacent data qubits, a coupler control port that controls the coupler qubit and a readout port that reads out the data qubits, on a two-dimensional plane.

In one embodiment, the qubit substrate may comprise the data qubits arranged in a square lattice, the coupler qubits disposed between adjacent data qubits arranged in a square lattice, the coupler control port that controls the coupler qubits disposed at the center of the square lattice of the coupler qubits and the readout port that reads out the data qubits at the center of the square lattice of the data qubits.

In one embodiment, the qubit substrate may comprise three or more data qubits, a coupler qubit disposed between adjacent data qubits, a coupler control port that controls the coupler qubit, a readout port that reads out the data qubits and 1-qubit control port for controlling 1-qubit of the data qubits, on a two-dimensional plane.

In one embodiment, the qubit substrate may comprise the data qubits arranged in a square lattice, the coupler qubits disposed between adjacent data qubits arranged in a square lattice, the coupler control port that controls the coupler qubits disposed at the center of the square lattice of the coupler qubits, the readout port that reads out the data qubits at the center of the square lattice of the data qubits and 1-qubit control port for controlling 1-qubit of the data qubits of the data qubits at the center of the square lattice of the data qubits.

In one embodiment, the qubit substrate may further comprise 1-qubit control port for controlling 1-qubit of the data qubits at the center of the square lattice of the data qubits.

In one embodiment, the first data qubit, the second data qubit and the coupler qubit may be superconducting qubits.

Another embodiment of the invention is a superconducting quantum gate device. This device comprises the aforementioned quantum gate device and a refrigerator for cooling and operating the qubit substrate.

According to this embodiment, it is possible to provide a superconducting quantum gate device that realizes the elimination of residual ZZ interactions and 2-quantum gate operation without the need for external magnetic flux.

Yet another embodiment of the invention is a quantum computer. This computer comprises the aforementioned superconducting quantum gate device and a control unit that controls the superconducting quantum gate device.

According to this embodiment, it is possible to provide a quantum computer that realizes the elimination of residual ZZ interactions and 2-quantum gate operation without the need for external magnetic flux.

Another embodiment of the invention is a method of controlling a quantum gate operation for a qubit system that comprises at least two data qubits, namely a first data qubit and a second data qubit, and a coupler qubit disposed between the first data qubit and the second data qubit. This method comprises irradiating a first cross-Rabi transition drive pulse defined by the frequency $\omega_c + |\omega_1\text{-}\omega_2|$ to the coupler qubit and irradiating a residual ZZ interaction elimination drive pulse of frequency $\omega_c + |\omega_1\text{-}\omega_2| - \delta$, which is shifted by a predetermined frequency $\delta$ from the first cross-Rabi transition drive pulse, to the coupler qubit. The resonance frequency of the first excited state of the first data qubit is $\omega_1$. The resonance frequency of the first excited state of the second data qubit is $\omega_2$. The resonance frequency of the first excited state of the coupler qubit is $\omega_c$. The predetermined frequency shift $\delta$ is a value that eliminates the residual ZZ interaction between the first data qubit and the second data qubit.

According to this embodiment, it is possible to perform the elimination of the residual ZZ interaction and the two-qubit gating operation without the need for an external magnetic flux.

Another embodiment of the invention is also a method of controlling a quantum gate operation for a qubit system that comprises at least two data qubits, namely a first data qubit and a second data qubit, and a coupler qubit disposed between the first data qubit and the second data qubit. This method comprises irradiating a second cross-Rabi transition drive pulse defined by the frequency $\omega_c - |\omega_1\text{-}\omega_2|$ to the coupler qubit and irradiating a residual ZZ interaction elimination drive pulse of frequency $\omega_c$ - $|\omega_1-\omega_2|$ - $\delta$, which is shifted by a predetermined frequency $\delta$ from the second cross-Rabi transition drive pulse, to the coupler qubit. The resonance frequency of the first excited state of the first data qubit is $\omega_1$. The resonance frequency of the first excited state of the second data qubit is $\omega_2$. The resonance frequency of the first excited state of the coupler qubit is $\omega_c$. The predetermined frequency shift $\delta$ is a value that eliminates the residual ZZ interaction between the first data qubit and the second data qubit.

According to this embodiment, it is possible to perform the elimination of the residual ZZ interaction and the two-qubit gating operation without the need for an external magnetic flux.

Another embodiment of the invention is a quantum gate device. This quantum gate device comprises a qubit substrate that comprises at least two data qubits, namely a first data qubit and a second data qubit, and a coupler qubit disposed between the first data qubit and the second data qubit and a pulse irradiator that irradiates drive pulses to the coupler qubit. The pulse irradiator irradiates a microwave defined by the frequency $\omega_1$ to the coupler qubit to perform a first quantum gate operation. The resonance frequency of the first excited state of the first data qubit is $\omega_1$. The resonance frequency of the first excited state of the second data qubit is $\omega_2$.

In one embodiment, a quantum gate device comprises a qubit substrate that comprises at least two data qubits, namely a first data qubit and a second data qubit, and a coupler qubit disposed between the first data qubit and the second data qubit and a pulse irradiator that irradiates drive pulses to the coupler qubit. The pulse irradiator irradiates a microwave defined by the frequency $\omega_2$ to the coupler qubit to perform a second quantum gate operation. The resonance frequency of the first excited state of the first data qubit is $\omega_1$. The resonance frequency of the first excited state of the second data qubit is $\omega_2$.

According to this embodiment, a quantum gate operation for each data qubit can be performed by simply irradiating a microwave to the coupler qubit without the need to directly control the data qubits.

Any combination of the above components, and any conversion of the expressions of the present disclosure between methods, devices, systems, recording media, computer programs, etc., is also valid as an embodiment of the present disclosure.

## ADVANTAGEOUS EFFECTS OF INVENTION

The present invention provides a technique for eliminating residual ZZ interaction and 2-quantum gate operation without the need for external magnetic flux.

## BRIEF DESCRIPTION OF DRAWINGS

[FIG. 1] Fig. 1 shows a functional block diagram of a quantum gate device according to the first embodiment.
[FIG. 2] Fig. 2 shows an energy level diagram showing the energy transition of the system in Fig. 1.
[FIG. 3] Fig. 3 shows a schematic diagram of the geometrical phase obtained by the cross-Rabi transition.
[FIG. 4] Fig. 4 shows a schematic diagram showing the control phase gate acting between the first and second data qubits.
[FIG. 5] Fig. 5 shows a schematic diagram showing a pulse sequence when implementing the control phase gate of Fig. 4.
[FIG. 6] Fig. 6 shows a schematic diagram showing how the transition frequency is modulated by the ac Stark shift of the state pertaining to the cross-Rabi transition when a microwave is applied that is detuned by $\delta$ from the cross-Rabi transition.
[FIG. 7] Fig. 7 shows a functional block diagram of a quantum gate device according to the second embodiment.
[FIG. 8] Fig. 8 shows a diagram showing the strength of the cross-resonance $\eta$ and the residual ZZ interaction as a function of the coupling strength of the classical coupler.
[FIG. 9] Fig. 9 shows a plan view of a qubit substrate according to the third embodiment.
[FIG. 10] Fig. 10 shows a plan view of a qubit substrate in which the qubits of Fig. 9 are further integrated and arranged in a square lattice.
[FIG. 11] Fig. 11 shows a plan view of a qubit substrate according to the fourth embodiment.
[FIG. 12] Fig. 12 shows a plan view of a qubit substrate in which the qubits of Fig. 11 are further integrated and arranged in a square lattice.
[FIG. 13] Fig. 13 shows the frequencies of data qubits and coupler qubits.
[FIG. 14] Fig. 14 shows the qubits and frequencies around the coupler control port.
[FIG. 15] Fig. 15 shows the frequencies used around coupler control port 1 in Fig. 9 and frequencies in error.
[FIG. 16] Fig. 16 shows the frequencies used around coupler control port 2 in Fig. 9 and frequencies in error.
[FIG. 17] Fig. 17 shows a functional block diagram of a superconducting quantum gate device according to the fifth embodiment.

[FIG. 18] Fig. 18 shows a functional block diagram of a quantum computer according to the sixth embodiment.

[FIG. 19] Fig. 19 shows a flowchart showing the processing of the quantum gate operation method according to the seventh embodiment.

[FIG. 20] Fig. 20 shows a photograph of the qubit substrate used in the verification experiment.

[FIG. 21] Fig. 21 shows the experimental results of observing Rabi oscillations between the states corresponding to the thin solid arrow in Fig. 2.

[FIG. 22] Fig. 22 shows the experimental results of observing Rabi oscillations between the states corresponding to the thick solid arrow in Fig. 2.

[FIG. 23] Fig. 23 shows the results of evaluating the accuracy of the control phase gate by interleaved randomized benchmarking.

[FIG. 24] Fig. 24 shows the results of inducing ZZ interaction by ac Stark shift and eliminating residual ZZ interaction.

## DESCRIPTION OF EMBODIMENTS

The present invention will be described below with reference to the drawings based on suitable embodiments. Identical or equivalent components, parts, and processes shown in each drawing shall be given the same symbol, and duplicated explanations will be omitted where appropriate. The scale and shape of each part shown in each drawing are set for convenience in order to facilitate explanation, and should not be construed as limiting unless otherwise noted. When terms such as "first," "second," etc. are used in this specification or in the claims, unless otherwise mentioned, such terms do not indicate any order or degree of importance, but only to distinguish one configuration from another. In addition, in each drawing, some parts of the components that are not important to the description of the form are omitted.

### The first embodiment

Figure 1 is a functional block diagram of a quantum gate device 1 according to the first embodiment. The quantum gate device 1 comprises a qubit substrate 10 and a pulse irradiator 20.

The qubit substrate 10 comprises a first data qubit 11, a second data qubit 12 and a coupler qubit 13. The coupler qubit 13 is disposed between the first data qubit 11 and the second data qubit 12. The coupler qubit 13 is coupled to the first data qubit 11 and the second data qubit 12 via capacitors 101 and 102, respectively. The first data qubit 11 has a Josephson element 1001 and a capacitor 1101 connected with each other in parallel to form a resonant circuit. The second data qubit 12 has a Josephson element 1002 and a capacitor 1102 connected with each other in parallel to form a resonant circuit. The coupler qubit 13 has a Josephson element 1003 and a capacitor 1103 connected with each other in parallel to form a resonant circuit. In other words, in the example of Figure 1, the first data qubit 11, the second data qubit 12 and the coupler qubit 13 all comprises fixed-frequency, transmon-type qubits.

Pulse irradiator 20 irradiates drive pulses to the coupler qubit 13. More specifically, the pulse irradiator 20 irradiates a first cross-Rabi transition drive pulse of which frequency is defined by $\omega_c + |\omega_1 - \omega_2|$ and a residual ZZ interaction elimination drive pulse of which frequency is defined by $\omega_c + |\omega_1 - \omega_2| - \delta$, which is shifted by a predetermined frequency $\delta$ from the first cross-Rabi transition drive pulse to the coupler qubit 13. Here,

- the resonance frequency of the first excited state of the first data qubit 11 is $\omega_1$,
- the resonance frequency of the first excited state of the second data qubit 12 is $\omega_2$ and
- the resonance frequency of the first excited state of the coupler qubit 13 is $\omega_c$.

The predetermined frequency shift $\delta$ is the value that eliminates the residual ZZ interaction between the first data qubit 11 and the second data qubit 12. The cross-Rabi transition drive pulse is described in more detail below.

Cross-Rabi Transition Drive Pulse The Hamiltonian of the system shown in Figure 1 can be modeled by the following equation (1) in which the anharmonic oscillators are coupled by the Jaynes-Cummings interaction. [Equation 1]

$$\frac{\hat{H}}{\hbar} = \sum_i \omega_i \hat{a}_i^\dagger \hat{a}_i + \frac{\alpha_i}{2} \hat{a}_i^\dagger \hat{a}_i^\dagger \hat{a}_i \hat{a}_i + \sum_{i \neq c} g_{ic} \left( \hat{a}_i^\dagger \hat{a}_c + \hat{a}_i \hat{a}_c^\dagger \right) \qquad (1)$$

Here, :

[Equation 2]

$$\hbar$$

is the Planck constant h divided by $2\pi$. $\omega_i$, ($i \in \{1,2,c\}$) is the frequency of the first excited state of the first data qubit 11 (i=1), the second data qubit 12 (i=2) and the coupler qubit 13 (i=c), respectively. $\alpha_i$, ($i \in \{1,2,c\}$) are the anharmonicity of the first data qubit 11 (i=1), the second data qubit 12 (i=2) and the coupler qubit 13 (i=c).

[Equation 3]

$$\hat{a}_i^\dagger, \hat{a}_i$$

are a creation operator and an annihilation operator for each mode, respectively. $g_{ic}$ is a constant that represents the strength of the Jaynes-Cummings interaction. For simplicity, we do not consider direct coupling between the first data qubit and the second qubit. The physical system modeled in Equation (1) is assumed to be generated in a parameter domain called the dispersion domain. In this domain, the following relationship holds.

[Equation 4]

$$|g_{ic}/\Delta_{ic}| \ll 1,\ \Delta_{ic} = \omega_i - \omega_c$$

The new parametric resonance proposed below can be induced by applying a microwave to the coupler qubit 13 in the system described by Equation (1) in the dispersion region. The microwave drive can be modeled using the Hamiltonian expressed in Equation (2) in a coordinate system rotating at the drive frequency $\omega_d$.

[Equation 5]

$$\hat{H}_d/\hbar = \Omega(\hat{a}_c + \hat{a}_c^\dagger) \qquad (2)$$

Here, $\Omega$ is a constant representing the drive intensity.

Figure 2 is an energy level diagram showing the energy transition of the system in Figure 1. Here, however, the states up to excitation number 2 are extracted and shown. The bracket shows, from left to right, the states of the first data qubit, the second data qubit and the coupler qubit. In other words, $|Q_1Q_2\rangle|Qc\rangle_c$ indicates that the first data qubit is in state $Q_1$, the second data qubit in state $Q_2$ and the coupler qubit in state $Q_c$. The levels indicated by the thick solid lines are the levels used for calculation in the subspace where the coupler qubit is in the ground state. The levels indicated by the thin solid lines are the subspace in which the coupler qubit is in the first excited state.

Applying the above microwave drive to the system in Figure 1 induces the transitions indicated by the thick solid arrow or thin solid arrow in Figure 2. In the coordinate system rotating at the drive frequency $\omega_d$, the drive frequency is set so that the energy conservation shown in equations (3) and (4) holds for the transitions indicated by the thick arrow and thin solid arrow, respectively.

[Equation 6]

$$\omega_2 + \omega_d = \omega_1 + \omega_c \qquad (3)$$

[Equation 7]

$$\omega_1 + \omega_d = \omega_2 + \omega_c \qquad (4)$$

The thick solid arrow indicates the energy transition when a microwave is applied at the drive frequency at which the energy conservation in equation (3) is satisfied, i.e., $\omega_d = \omega_c + \Delta_{12}$, $\Delta_{12} = \omega_1 - \omega_2$. In this case, a photon of frequency $\omega_2$ stored in the second data qubit and a photon of frequency $\omega_d$ given by the microwave drive are converted into a photon stored in the first data qubit of frequency $\omega_1$ and a photon stored in the coupler qubit of frequency $\omega_c$, respectively, by a four-wave mixing process due to third-order nonlinear effects of the Josephson junction.

The thin solid arrow indicates the energy transition when a microwave is applied at the drive frequency at which the energy conservation in equation (4) is satisfied, i.e., $\omega_d = \omega_c - \Delta_{12}$, $\Delta_{12} = \omega_1 - \omega_2$. In this case, a photon of frequency $\omega_1$ stored in the second data qubit and a photon of frequency $\omega_d$ given by the microwave drive are converted into a photon stored in the first data qubit of frequency $\omega_2$ and a photon stored in the coupler qubit of frequency $\omega_c$, respectively, by a four-wave mixing process due to third-order nonlinear effects of the Josephson junction.

The above is a qualitative description of the proposed parametric resonance. As shown in Figure 2, in this resonance, the state in which the total number of excitations is one transitions to the state in which the total number of excitations is two, exchanging excitations between the data qubits. Thus, by applying a microwave drive to the coupler qubits of a fixed-frequency transmon, a parametric resonance originating from the third-order nonlinear effect of the coupler qubits is generated, and a state transitions to the state in which the total number of excitations is different by one while exchanging excitations between the data qubits. Such a phenomenon and principle were previously unknown and were discovered by the inventors in the process of devising the present disclosure. The inventors named this transition "cross-Rabi transition" or "Coupler-Assisted Swap (CAS) transition" since this is a transition in which the total number of excitations is different by one while exchanging excitations. The term "cross-Rabi transition" will be used hereafter in this document. The pulse that drives the cross-Rabi transition is also referred to as "cross-Rabi transition drive pulse."

Cross-Rabi transitions can be used to realize two functions of quantum gate devices. The first function is a quantum gate operation. This uses the geometric phase obtained by resonantly utilizing Cross-Rabi transitions to induce Rabi oscillations to and from states outside of computational space. Figures 2 and 3 illustrate this quantum gate operation.

Figure 3 is a schematic diagram of the geometric phase obtained by the cross-Rabi transition. Figure 3 shows the Bloch sphere defined by two states with respect to the cross-Rabi transition. As an example, the following describes the cross-Rabi transition corresponding to the thick solid arrow in Figure 2. When the cross-Rabi transition is driven by a microwave starting from the starting state $|01\rangle |0\rangle_c$ belonging to the computational space, the state indicated by the arrow evolves in time along the dotted line on the surface of the Bloch sphere shown in Figure 3. If, as a result of the time evolution, the end state coincides with the |start state $|01\rangle |0\rangle_c$, the dotted line in Figure 3 becomes a closed curve. The geometric phase obtained in this case is proportional to the solid angle A enclosed by this closed curve. In this case, time evolution is a Unitary process. Therefore, the phase of the initial state advances by the amount of the geometric phase obtained compared to the phase of other states in the computational space. By adjusting the length and frequency of the drive microwave to appropriately, the quantum gate operation can be achieved.

For example, by adjusting the absolute value of the geometric phase to $\pi$, a control phase gate can be achieved between the first data qubit 11 and the second data qubit 12, as shown in Figure 4. Here, Figure 4 is a schematic diagram showing the control phase gate acting between the first data qubit 11 and the second data qubit 12.

Figure 5 is a schematic diagram showing the pulse sequence when implementing the control phase gate of Figure 4. As mentioned above, here a microwave oscillating at a frequency $\omega_d = \omega_c + \Delta_{12}$ is applied to the coupler qubit 13. This microwave also weakly modulates the frequency of the data qubits, causing an AC Stark shift. Therefore, a local phase gate is applied to each data qubit to compensate for the phase shift that occurs. This phase gate is implemented using a technique called "virtual phase gate.

The second function of the quantum gate device is the modulation of the ZZ interaction. This is achieved by inducing an AC Stark shift in the levels in the computational space through the distributed use of cross-Rabi transitions. This effectively eliminates the residual coupling, called the residual ZZ interaction, which exists due to the coupling between data qubits. The strength of the residual coupling $\xi$ can be expressed as below, using each level of the computational space.

$$\xi = \omega_{11} - \omega_{10} - \omega_{01}$$

Figure 6 is a schematic diagram showing how the transition frequency for the states pertaining to the cross-Rabi transition is modulated by AC Stark shift when a microwave is applied that is detuned by $\delta$ from the cross-Rabi transition. When the cross Rabi-transition indicated by the thick solid arrow in Figure 2 is used in a distributed manner, the frequency $\omega_{01}$ shifts as shown in Figure 6. The residual coupling can therefore be expressed as $\xi(\omega_d, \Omega)$ and can be modulated by the frequency $\omega_d$ and amplitude $\Omega$ of the drive microwave.

Next, we derive this interaction analytically. First, the Hamiltonian in the dispersion domain expressed in Eq. (1) is perturbatively diagonalized up to the second order of the coupling constant $g_{ic}$ using a method called the Schrieffer-Wolff transform. The Schrieffer-Wolff transform is expressed by the following equation (5):

[Equation 9]

$$\frac{\widehat{H}_{eff}}{\hbar} \approx e^{\hat{S}} \widehat{H} e^{-\hat{S}} \qquad (5)$$

using the following Skew-Hermitian matrix.

[Equation 8]

$$\hat{S}$$

Here:

[Equation 10]

$$\hat{S} = \hat{S}_1 + \hat{S}_2$$

of the coupling constant $g_{ic}$ valid up to the second order can be obtained by solving the following equations (6) and (7).
[Equation 11]

$$[\widehat{H}_0, \hat{S}_1] + \widehat{H}_v = 0 \qquad (6)$$

[Equation 12]

$$[\widehat{H}_0, \hat{S}_2] + \frac{1}{2}[\widehat{H}_v, \hat{S}_1] = 0 \qquad (7)$$

Here, the following equations hold.

[Equation 13]

$$\widehat{H}_0 = \sum_i \omega_i \hat{a}_i^\dagger \hat{a}_i + \frac{\alpha_i}{2} \hat{a}_i^\dagger \hat{a}_i^\dagger \hat{a}_i \hat{a}_i$$

[Equation 14]

$$\widehat{H}_v = \sum_{i \neq c} g_{ic} \left( \hat{a}_i^\dagger \hat{a}_c + \hat{a}_i \hat{a}_c^\dagger \right)$$

Equation (1) can be approximated by the following equation (8):
[Equation 15]

$$\frac{\widehat{H}_{eff}}{\hbar} \approx \sum_i \widetilde{\omega}_i \hat{a}_i^\dagger \hat{a}_i + \frac{\widetilde{\alpha}_i}{2} \hat{a}_i^\dagger \hat{a}_i^\dagger \hat{a}_i \hat{a}_i \qquad (8)$$

using the obtained:

[Equation 10]

$$\hat{S} = \hat{S}_1 + \hat{S}_2$$

Here, :

[Equation 16]

$$\widetilde{\omega}_i$$

is the frequency of each Lamb-shifted mode, and:

[Equation 17]

$$\tilde{\alpha}_i$$

is the effective anharmonicity.

Also, the drive Hamiltonian (2) can be expressed by the following equation (9):
[Equation 18]

$$\widehat{H}_d^{eff} \approx \widehat{H}_d - \left[\hat{S}, \widehat{H}_d\right] + \frac{1}{2}\left[\hat{S}_1, \left[\hat{S}_1, \widehat{H}_d\right]\right] \qquad (9)$$

by being expanded this:

[Equation 8]

$$\hat{S}$$

Using equation (9), the transition intensity corresponding to the thin solid arrow in Figure 2 in the situation where microwave drive is applied can be expressed by the following equation (10).

[Equation 19]

$$g_{cr}^{red} \approx \left\langle 100 \middle| \widehat{H}_d^{eff} \middle| 011 \right\rangle = \frac{-2 g_{1c} g_{2c} \alpha_c \Omega}{\Delta_{12}(\omega_c - \omega_2 + \alpha_c)(\omega_c - \omega_1)}$$

The transition intensity corresponding to the thick solid arrow can be expressed by the following equation (11).

[Equation 20]

$$g_{cr}^{blue} \approx \left\langle 010 \middle| \widehat{H}_d^{eff} \middle| 101 \right\rangle = \frac{2 g_{1c} g_{2c} \alpha_c \Omega}{\Delta_{12}(\omega_c - \omega_1 + \alpha_c)(\omega_c - \omega_2)}$$

As explained above, according to this embodiment, the residual ZZ interaction can be effectively eliminated while realizing quantum gate operation by driving the coupler qubit at a specific frequency. In other words, it is possible to provide a quantum gate device that realizes the elimination of residual ZZ interactions and 2-quantum gate operation without the need for external magnetic flux.

The pulse irradiator 20 may superimpose either the first cross-Rabi transition drive pulse or the second cross-Rabi transition drive pulse and the residual ZZ interaction elimination drive pulse, and irradiate them on the coupler qubit 13. Alternatively, the pulse irradiator 20 may irradiate coupler qubits 13 with both the first cross-Rabi transition drive pulse and the second cross-Rabi transition drive pulse and the residual ZZ interaction elimination drive pulse.

The second embodiment

Figure 7 is a functional block diagram of the quantum gate device 2 according to the second embodiment. The quantum gate device 2 comprises a qubit substrate 10a and a pulse irradiator 20a.

The qubit substrate 10a comprises a first data qubit 11, a second data qubit 12, a coupler qubit 13 and a capacitor 30. The coupler qubit 13 is positioned between the first data qubit 11 and the second data qubit 12. The coupler qubit 13 is coupled to the first data qubit 11 and the second data qubit 12 via the capacitors 101 and 102, respectively. Furthermore, the first data qubit 11 and the second data qubit 12 are directly coupled via the capacitor 30. In other words, the quantum gate device 2 differs from the configuration of the quantum gate device 1 in Figure 1 in that it further couples the first data qubit 11 and the second data qubit 12 via the capacitor 30. The other configuration of the quantum gate device 2 is common to the configuration of the quantum gate device 1.

The pulse irradiator 20a irradiates the coupler qubit 13 with a first cross-Rabi transition drive pulse or a second cross-Rabi transition drive pulse and a residual ZZ interaction elimination drive pulse. The first cross-Rabi transition drive pulse or the second cross-Rabi transition drive pulse is common to the quantum gate device 1 in Figure 1, but the predetermined frequency shift $\delta$ that defines the residual ZZ interaction elimination drive pulse differs from that of the quantum gate device 1. That is, the frequency shift $\delta$ of the quantum gate device 2 is a value that eliminates the residual ZZ interaction between the first data qubit and the second data qubit and the cross-resonance between the first data qubit and the second data qubit. This point is explained in more detail below.

In the configuration shown in Figure 1, XI gates and IX gates are slightly mixed with elements of 2-quantum gates, called cross-resonances. A cross-resonance is a source of 1-quantum gate error and should be removed.

Therefore, in this embodiment, the first data qubit 11 and the second data qubit 12 are not only coupled via the coupler qubit 13, but also directly coupled using the capacitor 30, as shown in Figure 7. Hereafter, the coupling via the coupler qubit 13 is referred to as "quantum coupler" and the direct coupling using the capacitor 30 is referred to as "classical coupler". The inventors have found, as a result of diligent study, that by precisely adjusting the size of the coupling in the classical coupler, it is possible to cancel out the cross-resonance.

Figure 8 shows the strength of the cross-resonance $\eta$, and the residual ZZ interaction as a function of the coupling strength of the classical coupler. At the coupling strength (about 9 MHz) indicated by the arrow, the cross-resonance zero-crosses and disappears. Under those conditions, the residual ZZ interaction is also reduced effectively enough. Therefore, the predetermined frequency shift $\delta$ that defines the residual ZZ interaction elimination drive pulse irradiated by the pulse irradiator 20a of the quantum gate device 2 should be a value that achieves this coupling strength.

According to this embodiment, in addition to reducing the residual ZZ interaction, cross-resonance can be eliminated in the quantum gate device.

The third embodiment

Next, we will explain an example of a quantum gate device according to the above embodiment in which data qubits and coupler qubits are integrated.

Figure 9 is a plan view of the third embodiment of the qubit substrate 10b. The qubit substrate 10b comprises three or more data qubits, i.e., a first data qubit 11, a second data qubit 12 and a third data qubit 19, a coupler qubit 13 disposed between adjacent data qubits, a coupler control port 14 that controls the coupler qubit 13 and a readout port 15 that reads out the data qubits on a two-dimensional plane. As illustrated, specifically, the qubit substrate 10b comprises 9 (nine) data qubits, twelve coupler qubits, two coupler control ports 14, and one readout port 15.

The coupler control port 14 is the wiring for controlling the coupler qubits and is connected to the adjacent front, back, left and right coupler qubits, respectively. Readout port 15 is wiring for reading out data qubits and is connected to four adjacent diagonal data qubits, respectively.

According to this embodiment, the qubits can be integrated and the coupler control port and the readout port can be used to control the coupler qubits and read out the data qubits, respectively.

Figure 10 is a plan view of the qubit substrate in which the qubits of Fig. 9 are further integrated and arranged in a square lattice. In this example, the number of data qubits is 64 (sixty four), the number of coupler qubits is 112 (one hundred twelve), the number of coupler control ports is 40 (forty), and the number of readout ports is 16 (sixteen). If $n^2$ data qubits are arranged in this arrangement in a square lattice, the number of coupler qubits is 2n(n-1), the number of coupler control ports is $(n+1)^2-(n/2+1)^2-n^2/4$ and the number of readout ports is $n^2/4$. However, the arrangement of each qubit and each port is not limited to that in Figure 10, and their number is not limited to the above.

According to this embodiment, the qubits to be mounted can be further highly integrated.

## The fourth embodiment

Figure 11 is a plan view of the qubit substrate 10c according to the fourth embodiment. The qubit substrate 10c comprises three or more data qubits, namely a first data qubit 11, a second data qubit 12 and a third data qubit 19, a coupler qubit 13 disposed between adjacent data qubits, a coupler control port 14 that controls the coupler qubit 13, a readout port 15 that reads out the data qubits, and a 1-qubit control port 16, on a two-dimensional plane. As illustrated, specifically, the qubit substrate 10c comprises 9 (nine) data qubits, 12 (twelve) coupler qubits, two coupler control ports 14, one readout port 15 and one 1-qubit control port 16.

The coupler control port 14 is the wiring for controlling the coupler qubits and is connected to the adjacent front, back, left and right coupler qubits, respectively. The readout port 15 is wiring for reading out data qubits and is connected to four adjacent diagonal data qubits, respectively. The 1-qubit control port 16 is for controlling 1-qubit of the quantum gate device and is connected to four adjacent diagonal data qubits, respectively.

According to this embodiment, it is possible to control 1-qubit of the quantum gate device.

Figure 12 is a plan view of a qubit substrate in which the qubits of Figure 11 are further integrated and arranged in a square lattice. In this example, there are 64 (sixty fore) data qubits, 112 (one hundred twelve) coupler qubits, 40 (forty) coupler control ports, 16 (sixteen) readout ports, and 25 (twenty five) 1-qubit control ports. In this arrangement, if $n^2$ data qubits are arranged in a square lattice, the number of coupler qubits is $2n(n-1)$, the number of coupler control ports is $(n+1)^2-(n/2+1)^2-n^2/4$, the number of readout ports is $(n+1)^2-(n/2+1)^2-(n/2+1)^2-n^2/4$ and the number of one-qubit control ports is $(n/2+1)^2$. However, the arrangement of each qubit and each port is not limited to that in Figure 12, and their number is not limited to the above.

According to this embodiment, the qubits to be mounted can be further highly integrated.

Figure 13 shows the frequencies of data and coupler qubits. The ellipses are the data qubits, the rectangles are the coupler qubits, the right-down shaded circles are the coupler control ports and the left-down shaded circles are the readout ports. The numbers within the data and coupler qubits are the frequencies expressed in MHz. Since multiple qubits are excited from a single wire, the frequencies used must be adjusted to avoid collisions. For example, by assigning frequencies as shown in Figure 13, the eight different frequencies (four 1-qubit + four 2-qubit) applied to each wire will all be different, thus reducing crosstalk.

Furthermore, the frequency at which the ZZ gate operation is performed $\omega_c + |\omega_1-\omega_2| = \omega_c + |\Delta_{12}|$ ($\omega_1-\omega_2 = \Delta_{12}$ was assumed and so forth). The resonance frequency of the Fogi transition must be different from the resonance frequency of the cross-Rabi transition that performs the ZZ gate operation, i.e., no frequency collision occurs. This frequency collision is explained below.

Figure 14 shows the qubits and frequencies around the coupler control port. Figure 15 shows the frequencies used around coupler control port 1 in Figure 9 and the frequencies that result in errors. Figure 16 shows the frequencies used around coupler control port 2 in Figure 16 and the frequencies that result in errors. Here, $\alpha$ represents the nonlinearity of the qubit. For example, $\alpha$c12 represents the nonlinearity of the quantum coupler Qc12 between the first qubit and second qubit. The black circles ($\omega$1, $\omega$2, $\omega$3, w4) and white circles ($\omega$c12 + |$\Delta$12 |, $\omega$c24 + |$\Delta$24 |, $\omega$c13 + |$\Delta$13 |, $\omega$c34 + |$\Delta$34 |) in Figures 15 and 16 represent the frequency used. On the other hand, the left-down shaded circles ($\omega$c12, wc24, wc13, $\omega$c34) and right-down shaded circles (2$\omega$c12+$\alpha$c12-$\omega$1, 2$\omega$c24+$\alpha$c24-$\omega$4, 2$\omega$c13+$\alpha$c13-$\omega$1, 2$\omega$c34+$\alpha$c34-$\omega$4, 2$\omega$c12+$\alpha$c12-$\omega$2, 2$\omega$c24+$\alpha$c24-$\omega$2, 2$\omega$c13+$\alpha$c13-$\omega$3, 2$\omega$c34+$\alpha$c34-$\omega$3) represent frequencies that result in error. In particular, the right-down shaded circles are the frequency at which the Fogi transition occurs.

Here, it is necessary to prevent collisions between "frequencies to be used" and collisions between "frequencies to be used" and "frequencies to be in error". In both Figures 15 and 16, the plots of the black and white circles do not collide with each other. Also, both the black and white circles are out of the region containing the frequencies in error, i.e., gray hatched region, indicating that the conditions for no frequency collision are met.

## The fifth embodiment

The techniques described above are expected to be applicable to various qubits. However, preferably, the first data qubit, the second data qubit and the coupler qubit are superconducting qubits.

Figure 17 is a functional block diagram of the superconducting quantum gate device 3 according to the fifth embodiment. The superconducting quantum gate device 3 comprises the aforementioned qubit substrate 10, which comprises superconducting qubits, and a refrigerator 40 for cooling and operating the qubit substrate 10.

The refrigerator 40 comprises a dilution refrigerator, cryostat, or the like. The temperature inside the refrigerator 40 is kept at a low temperature of several K (Kelvin) to several 10 mK (millikelvin). Equipment other than the qubit substrate 10, such as the pulse irradiator 20, is placed outside of the refrigerator 40.

According to this embodiment, it is possible to provide a superconducting quantum gate device that achieves the removal of residual ZZ interaction and two-qubit gate operation without an external magnetic flux.

The sixth embodiment

Figure 18 is a functional block diagram of the quantum computer 4 according to the sixth embodiment. The quantum computer 4 comprises the aforementioned superconducting quantum gate device comprising superconducting qubits and a control unit 50 that controls the superconducting quantum gate device 3. The control unit 50 performs, for example, syndrome extraction operations and logical quantum gate operations for quantum error correction processes and is implemented by a control device or PC placed outside the refrigerator 40.

According to this embodiment, it is possible to provide a quantum computer that achieves the removal of residual ZZ interaction and two-qubit gate operation without an external magnetic flux.

The seventh embodiment

Figure 19 is a flowchart showing the processing of the quantum gate operation method according to the seventh embodiment. The method is a quantum gate operation method for a qubit system comprising at least two data qubits, namely a first data qubit and a second data qubit, and a coupler qubit positioned between the first data qubit and the second data qubit, and includes step S1 and step S2. Let $\omega_1$ be the resonance frequency of the first excited state of the first data qubit, $\omega_2$ be the resonance frequency of the first excited state of the second data qubit and $\omega_c$ be the resonance frequency of the first excited state of the coupler qubit. Step S1 irradiates the coupler qubit with a first cross-Rabi transition drive pulse defined by the frequency $\omega_c + |\omega_1-\omega_2|$. Step S2 irradiates the coupler qubit with a residual ZZ interaction elimination drive pulse of frequency $\omega_c + |\omega_1-\omega_2| -\delta$, which is a predetermined frequency shift of $\delta$ from the first cross-Rabi transition drive pulse. The predetermined frequency shift $\delta$ is the value that eliminates the residual ZZ interaction between the first and the second data qubits.

Alternatively, step S1 may irradiate the coupler qubit with a second cross-Rabi transition drive pulse instead of the first cross-Rabi transition drive pulse. Here, the frequency of the second cross-Rabi transition drive pulse is defined as $\omega_c-|\omega_1-\omega_2|$. In this case, step S2 irradiates the coupler qubit with a residual ZZ interaction elimination drive pulse of frequency $\omega_c-|\omega_1-\omega_2|-\delta$, which is shifted by a predetermined frequency $\delta$ from the first cross-Rabi transition drive pulse. In this case, the predetermined frequency shift $\delta$ is still the value that eliminates the residual ZZ interaction between the first data qubit and the second data qubit.

According to this embodiment, it is possible to perform the elimination of the residual ZZ interaction and the two-qubit gating operation without an external magnetic flux using a quantum gate device.

Verification Experiments

The inventors conducted experiments to verify the techniques described above. Figure 20 shows a photograph of the qubit substrate used in this experiment.

Figure 21 shows the experimental results of observing the Rabi oscillations between the states corresponding to the thin solid arrow in Figure 2. Figure 22 shows the experimental results of observing the Rabi oscillations between the states corresponding to the thick solid arrow in Figure 2. In both Figures 21 and 22, the horizontal axis shows the length of the microwave drive pulse to induce the cross-Rabi interaction, and the vertical axis shows the detuning of the drive frequency of the microwave drive pulse from the frequency of the first excited state of the coupler qubit. The right horizontal bar of the graph represents the transmission characteristics of the readout resonator coupled to the qubit and is proportional to the occupancy of the first excited state of the qubit.

The resonance condition for the cross-Rabi transition is,

$$\sqrt{(\delta^2+4\Omega^2)},$$

in this example, this is set to 140 MHz, where the detuning of the drive frequency from the resonance of the coupler qubit is $\delta$ and the drive strength in terms of frequency is $\Omega$. Therefore, $\delta$ is slightly shifted from $\pm$140 MHz by the amount of $\Omega$. For this reason, it can be seen that the Rabi oscillation occurs in the vicinity of $\delta$ = -100 MHz in Figure 19 and $\delta$ = 113.5 MHz in Figure 20, respectively.

Next, the control phase gate was implemented using the cross-Rabi transition parameters obtained in Figure 22. For the implemented control phase gate, the accuracy was evaluated by a method called interleaved randomized benchmarking. The results are shown in Figure 23. The fidelity obtained by fitting is shown on the figure. As shown in the figure, it can be seen that a highly accurate control phase gate was realized with a fidelity of about 99%.

Finally, the transition indicated by the thick solid arrow in Figure 2 was driven slightly shifted from resonance to induce ZZ interactions due to ac Stark shifts and to eliminate residual ZZ interactions. The results are shown in Figure 24. The horizontal axis shows the detuning of the drive frequency from the coupler qubit transition frequency, and the vertical axis shows the strength of the residual ZZ interaction. The short vertical solid line shows the measured residual ZZ interaction, and the dotted line shows the fitting results of the measurement.

The long vertical line near the 125.6 MHz of the horizontal axis shows the detuning of the drive frequency from the resonance of the coupler qubit when the residual ZZ interaction, calculated from the fitting results, is zero. In other words, the drive frequency at which the residual interaction is zero, indicated by the arrow, can be obtained from Figure 24 by fitting the measured data for the strength of the residual ZZ interaction. Considering the fitting uncertainty, the residual ZZ interaction can be suppressed to the range of -150 Hz to 60 Hz. Note that the strength of the residual ZZ interaction without microwave drive is about 2.5 kHz. Thus, it is verified that the ZZ interaction can be made to be zero by an appropriate drive frequency and that the elimination of the residual ZZ interaction can be achieved using the cross-Rabi transitions in a distributed manner as expected.

The technique disclosed herein achieves two effects. One is the elimination of residual ZZ interactions that cause errors in quantum gates and the other is the realization of highly accurate two-qubit gates. The superconducting quantum circuit containing the coupler qubits used can be composed of all elements with fixed frequency qubits. Therefore, they do not require external magnetic flux and can be configured to be robust against noise. This means that all functions that need to be calibrated later, such as interaction optimization and gating, can be implemented only by the application of a microwave. Thus, the number of microwave wires to the qubits can be reduced. Fewer microwave wires directly contribute to higher number of qubits, and less error-prone control contributes to higher performance quantum computers. Furthermore, the problem of frequency collision is solved compared to existing methods.

As mentioned above, in this technique, all calibration of the quantum gates and residual interaction elimination is performed using a microwave. Since no tuning by DC magnetic fields is performed, there is no performance degradation of the qubits due to magnetic field noise and stable control is possible. As a result, high-fidelity two-qubit gates are realized. As shown in the results in the first half of this experiment, the world's highest level of performance of about 99% is achieved at the current performance level.

In the above experiment, microwaves also achieve two-quantum gate and residual ZZ interaction elimination at a very low intensity of about -87 dBm. This is due to the large transition amplitude of the cross-Rabi transitions, which can be controlled with an intensity 10 dB to 20 dB weaker than existing microwave-controlled gates. Such energy conservation of quantum gates solves the problem of heat when driving a large number of qubits and leads to high scalability.

On the other hand, all-microwave methods often require the application of a high-intensity microwave. However, such a high-intensity microwave causes heat problems as the number of qubits increases, creating the limitation that scalability is possible only within the cooling capacity of the refrigerator. As shown in the above experiment, the present method can achieve the two-qubit gate and the elimination of residual ZZ interaction using a very low intensity microwave of about -87 dBm. This is due to the large transition amplitude of the cross-Rabi transitions. Thus, the microwave control of this method is very efficient compared to existing methods and saves 10 dB to 20 dB in gating and ZZ interaction correction. This means that 10 to 100 times the number of qubits can be integrated in the same refrigerator as it is, contributing to the realization of large-scale superconducting quantum computers.

As explained above, the technology disclosed herein is extremely novel and industrially useful in that it applies a microwave drive to a coupler qubit and induces parametric resonance originating from the previously undiscovered third-order nonlinear effect of the coupler, thereby eliminating the residual ZZ interaction and realizing two-qubit gate operation.

Application to one-qubit gate operation In the above embodiments, we described the elimination of residual ZZ interaction and control phase gate operation using microwave irradiation to the coupler qubit. The techniques of the present disclosure are not limited to this, but can also be applied to ordinary quantum gate operations, i.e., one-qubit gating operations, using microwave irradiation to the coupler qubit.

Consider a system in which two data qubits $Q_i$ (i = 1, 2) and one coupler qubit $Q_c$ are coupled by a coupling constant $g_i$. The coupler qubit $Q_c$ is irradiated with a microwave of frequency $\omega_i$ of the data qubit $Q_i$ and intensity $\Omega_0{}^i$. Then, under the conditions that

$$g_{ic}/\Delta_{ic} << 1, \quad \Omega_0{}^i/\Delta_{ic} << 1, \quad (\Delta_{ic} = \omega_i - \omega_c),$$

the Hamiltonian of the whole system can be written as follows.

[Equation 21]

$$H^i = \frac{g_{ic}\Omega_0^i}{\Delta_{ic}}\left(\frac{\alpha_c}{\alpha_c + \Delta_{ic}}\right) Z_c X_i + \frac{g_{ic}\Omega_0^i}{\Delta_{ic}}\left(\frac{\Delta_{ic}}{\alpha_c + \Delta_{ic}}\right) I_c X_i + \nu_{IX}^i I_c X_i + \nu_{IY}^i I_c Y_i \qquad (12)$$

The first half two terms are the terms that drive the data transmon qubits via the coupler, i.e., CR terms. The second half two terms are the terms that drive the data transmon qubits directly due to microwave crosstalk on the chip, i.e., CT terms. Here, the coefficients corresponding to the drive intensity due to crosstalk are $\nu^i_{IX}$ and $\nu^i_{IY}$.

In the parameters of this system, the coupler qubit may be treated as the ground state, g-state, because the adiabatic condition of $\Omega_0^i/\Delta_{ic} << 1$ is satisfied. Therefore, if $Z_c = 1$ in this case, equation (12) can be rewritten as equation (13).

[Equation 22]

$$H^i = \left(\frac{g_{ic}\Omega_0^i}{\Delta_{ic}} + \nu_{IX}^i\right) I_c X_i + \nu_{IY}^i I_c Y_i \qquad (13)$$

From this equation, it can be seen that only the data qubit $Q_i$ can be driven without changing the state of the coupler qubit $Q_c$.

From the above, by irradiating the coupler qubit $Q_c$ with microwaves of frequencies $\omega_1$ and $\omega_2$ of each data qubit $Q_1$ and $Q_2$, a one-qubit gate of these data qubits $Q_1$ and $Q_2$ can be realized.

From the above, by irradiating the coupler qubit $Q_c$ with microwaves of frequencies $\omega_1$ and $\omega_2$ of each data qubit $Q_1$ and $Q_2$, a one-qubit gate of these data qubits $Q_1$ and $Q_2$ can be realized.

## The eighth embodiment

Referring to the quantum gate device 1 shown in Figure 1, the eighth embodiment will be described. The quantum gate device 1 comprises a qubit substrate 10, which comprises a first data qubit 11, a second data qubit 12 and a coupler qubit 13 disposed between the first data qubit 11 and the second data qubit 12, and a pulse irradiator 20, which irradiates drive pulses to the coupler qubits 13. When the resonance frequency of the first excited state of the first data qubit 11 is $\omega_1$ and the resonance frequency of the first excited state of the second data qubit 12 is $\omega_2$, the pulse irradiator 20 irradiates a microwave defined by the frequency $\omega_1$ to the coupler qubit 13. Thereby, the first quantum gate operation on the first qubit 11 is performed.

Alternatively, in the above configuration, the pulse irradiator 20 may irradiate a microwave defined by the frequency $\omega_2$ to the coupler qubit 13. In this case, a second quantum gate operation on the second qubit is performed.

According to this embodiment, a quantum gate operation for each data qubit can be performed by simply irradiating a microwave to the coupler qubit without the need to directly control the data qubits.

The present discloser has been described in terms of embodiments. It is understood by those skilled in the art that these embodiments are examples and that various variations are possible in the combination of their respective components and respective processing processes, and that such variations are also within the scope of the invention.

The first data qubit, the second data qubit and the coupler qubit are not limited to superconducting qubits, but may be any suitable qubit, for example, quantum dots, ion traps, etc.

According to this variant, the degree of freedom of configuration can be increased.

New embodiments resulting from the combination have the combined effects of each of the embodiments and variations combined.

The aforementioned embodiments and variations are only concrete examples, and many design changes such as modification, addition, deletion, etc. of components are possible. In the embodiments, the contents where such design changes are possible are emphasized with the term of "embodiments". However, design changes are also permitted for contents without such term.

## INDUSTRIAL APPLICABILITY

The present disclosure can be applied to quantum gate devices, superconducting quantum gate devices, quantum computers and methods of quantum gate operation.

## REFERENCE SIGNS LIST

1 Quantum gate device,
2 Quantum gate device,
3 Superconducting quantum gate device,
4 Quantum computer,

10 qubit substrate,
10a qubit substrate,
10b qubit substrate,
10c qubit substrate,
11 First data qubit,
12 Second data qubit,
13 Coupler qubit,
14 Coupler control port,
15 Readout port,
16 First qubit control port,
20 Pulse irradiator,
20a Pulse irradiator,
30 Capacitor,
40 Refrigerator,
50 Control unit,
101 Capacitor,
102 Capacitor,
1001 Josephson element,
1101 Capacitor,
1002 Josephson element,
1102 Capacitor,
1003 Josephson element,
1103 Capacitor,
S1 The step of irradiating the first cross-Rabi transition drive pulse to the coupler qubit,
S2 The step of irradiating the residual ZZ interaction elimination drive pulse to the coupler qubit.

**Claims**

**1.** A quantum gate device, comprising:

a qubit substrate that comprises at least two data qubits, namely a first data qubit and a second data qubit, and a coupler qubit disposed between the first data qubit and the second data qubit; and
a pulse irradiator that irradiates drive pulses to the coupler qubit,
wherein the pulse irradiator irradiates a first cross-Rabi transition drive pulse defined by the frequency $\omega_c + |\omega_1 - \omega_2|$ and a residual ZZ interaction elimination drive pulse of frequency $\omega_c + |\omega_1 - \omega_2| - \delta$, which is shifted by a predetermined frequency $\delta$ from the first cross-Rabi transition drive pulse,
wherein the resonance frequency of the first excited state of the first data qubit is $\omega_1$,
wherein the resonance frequency of the first excited state of the second data qubit is $\omega_2$,
wherein the resonance frequency of the first excited state of the coupler qubit is $\omega_c$ and
wherein the predetermined frequency shift $\delta$ is a value that eliminates the residual ZZ interaction between the first data qubit and the second data qubit.

**2.** A quantum gate device, comprising:

a qubit substrate that comprises at least two data qubits, namely a first data qubit and a second data qubit, and a coupler qubit disposed between the first data qubit and the second data qubit; and
a pulse irradiator that irradiates drive pulses to the coupler qubit,
wherein the pulse irradiator irradiates a second cross-Rabi transition drive pulse defined by the frequency $\omega_c - |\omega_1 - \omega_2|$ and a residual ZZ interaction elimination drive pulse of frequency $\omega_c - |\omega_1 - \omega_2| - \delta$, which is shifted by a predetermined frequency $\delta$ from the second cross-Rabi transition drive pulse,
wherein the resonance frequency of the first excited state of the first data qubit is $\omega_1$,
wherein the resonance frequency of the first excited state of the second data qubit is $\omega_2$,
wherein the resonance frequency of the first excited state of the coupler qubit is $\omega_c$ and
wherein the predetermined frequency shift $\delta$ is a value that eliminates the residual ZZ interaction between the first data qubit and the second data qubit.

**3.** The quantum gate device according to claim 1 or 2, wherein the pulse irradiator irradiates both the first cross-Rabi transition drive pulse and the second cross-Rabi transition drive pulse, and the residual ZZ interaction elimination drive pulse to the coupler qubit.

**4.** The quantum gate device according to claim 1, wherein the first cross-Rabi transition drive pulse performs a control phase gate between the first data qubit and the second data qubit.

**5.** The quantum gate device according to claim 2, wherein the second cross-Rabi transition drive pulse performs a control phase gate between the first data qubit and the second data qubit.

**6.** The quantum gate device according to claim 1 or 2, comprising:

a capacitor that couples the first data qubit with the second data qubit,
wherein the predetermined frequency shift $\delta$ is a value that eliminates the residual ZZ interaction between the first data qubit and the second data qubit and the cross-resonance between the first data qubit and the second data qubit.

**7.** The quantum gate device according to claim 1 or 2, wherein the qubit substrate comprises three or more data qubits, a coupler qubit disposed between adjacent data qubits, a coupler control port that controls the coupler qubit and a readout port that reads out the data qubits, on a two-dimensional plane.

**8.** The quantum gate device according to claim 7, wherein the qubit substrate comprises the data qubits arranged in a square lattice, the coupler qubits disposed between adjacent data qubits arranged in a square lattice, the coupler control port that controls the coupler qubits disposed at the center of the square lattice of the coupler qubits and the readout port that reads out the data qubits at the center of the square lattice of the data qubits.

**9.** The quantum gate device according to claim 7, wherein the qubit substrate further comprises 1-qubit control port for controlling 1-qubit of the data qubits.

**10.** The quantum gate device according to claim 8, wherein the qubit substrate further comprises 1-qubit control port for controlling 1-qubit of the data qubits at the center of the square lattice of the data qubits.

**11.** The quantum gate device according to claim 1 or 2, wherein the first data qubit, the second data qubit and the coupler qubit are superconducting qubits.

**12.** A superconducting quantum gate device, comprising:

the quantum gate device according to claim 11; and
a refrigerator for cooling and operating the qubit substrate.

**13.** A quantum computer, comprising:

the superconducting quantum gate device according to claim 12; and
a control unit that controls the superconducting quantum gate device.

**14.** A method of controlling a quantum gate operation for a qubit system that comprises at least two data qubits, namely a first data qubit and a second data qubit, and a coupler qubit disposed between the first data qubit and the second data qubit, comprising:

irradiating a first cross-Rabi transition drive pulse defined by the frequency $\omega_c + |\omega_1 - \omega_2|$ to the coupler qubit; and
irradiating a residual ZZ interaction elimination drive pulse of frequency $\omega_c + |\omega_1 - \omega_2| - \delta$, which is shifted by a predetermined frequency $\delta$ from the first cross-Rabi transition drive pulse, to the coupler qubit,
wherein the resonance frequency of the first excited state of the first data qubit is $\omega_1$,
wherein the resonance frequency of the first excited state of the second data qubit is $\omega_2$,
wherein the resonance frequency of the first excited state of the coupler qubit is $\omega_c$ and
wherein the predetermined frequency shift $\delta$ is a value that eliminates the residual ZZ interaction between the first data qubit and the second data qubit.

**15.** A method of controlling a quantum gate operation for a qubit system that comprises at least two data qubits, namely a first data qubit and a second data qubit, and a coupler qubit disposed between the first data qubit and the second data qubit, comprising:

irradiating a second cross-Rabi transition drive pulse defined by the frequency $\omega_c - |\omega_1 - \omega_2|$ to the coupler qubit; and
irradiating a residual ZZ interaction elimination drive pulse of frequency $\omega_c - |\omega_1 - \omega_2| - \delta$, which is shifted by a predetermined frequency $\delta$ from the second cross-Rabi transition drive pulse, to the coupler qubit,
wherein the resonance frequency of the first excited state of the first data qubit is $\omega_1$,
wherein the resonance frequency of the first excited state of the second data qubit is $\omega_2$,
wherein the resonance frequency of the first excited state of the coupler qubit is $\omega_c$ and
wherein the predetermined frequency shift $\delta$ is a value that eliminates the residual ZZ interaction between the first data qubit and the second data qubit.

**16.** A quantum gate device, comprising:

a qubit substrate that comprises at least two data qubits, namely a first data qubit and a second data qubit, and a coupler qubit disposed between the first data qubit and the second data qubit; and
a pulse irradiator that irradiates drive pulses to the coupler qubit,
wherein the pulse irradiator irradiates a microwave defined by the frequency $\omega_1$ to the coupler qubit to perform a first quantum gate operation,
wherein the resonance frequency of the first excited state of the first data qubit is $\omega_1$ and
wherein the resonance frequency of the first excited state of the second data qubit is $\omega_2$.

**17.** A quantum gate device, comprising:

a qubit substrate that comprises at least two data qubits, namely a first data qubit and a second data qubit, and a coupler qubit disposed between the first data qubit and the second data qubit; and
a pulse irradiator that irradiates drive pulses to the coupler qubit,
wherein the pulse irradiator irradiates a microwave defined by the frequency $\omega_2$ to the coupler qubit to perform a second quantum gate operation,
wherein the resonance frequency of the first excited state of the first data qubit is $\omega_1$ and
wherein the resonance frequency of the first excited state of the second data qubit is $\omega_2$.

FIG. 1

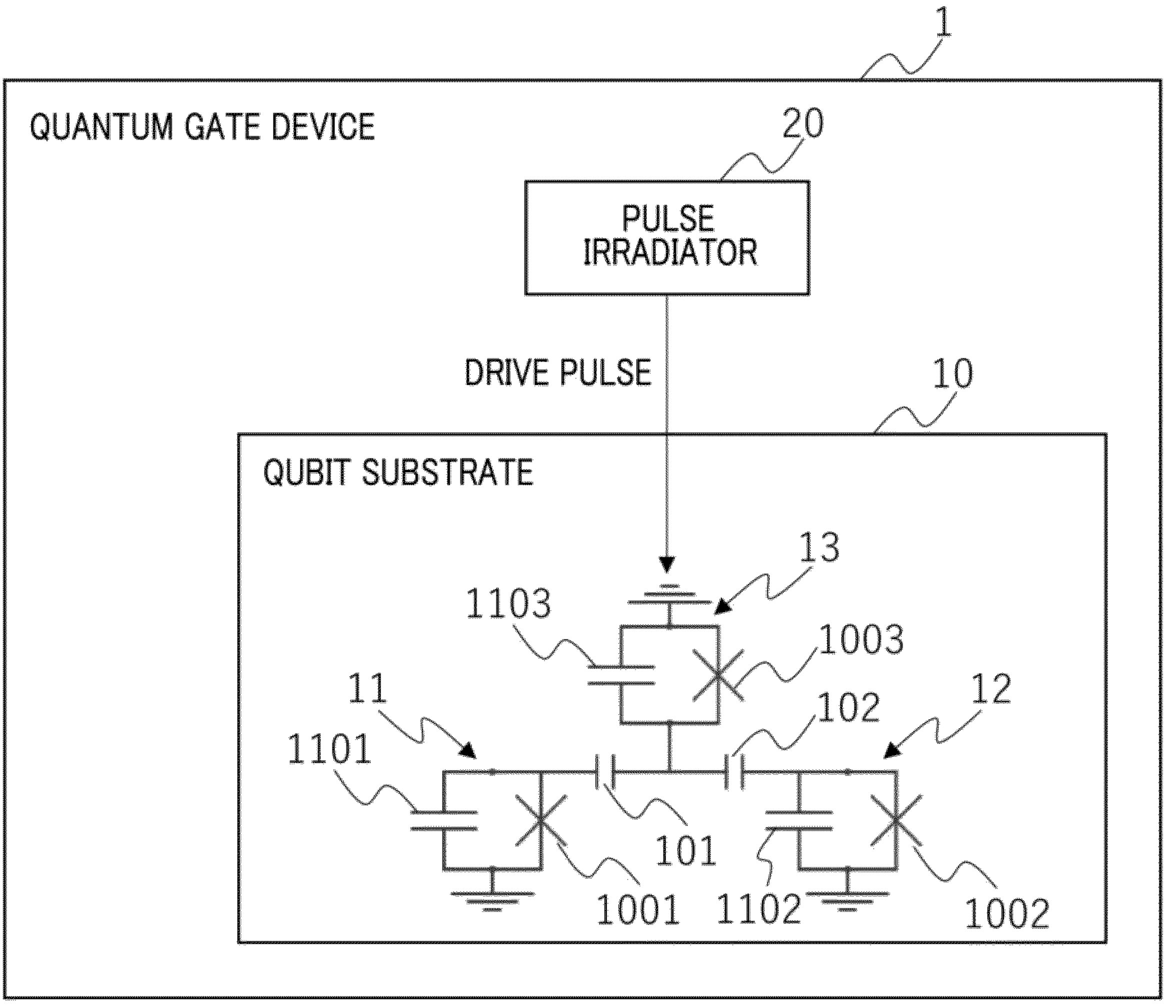
1
QUANTUM GATE DEVICE
20
PULSE
IRRADIATOR
DRIVE PULSE
10
QUBIT SUBSTRATE
13
1103
1003
11
102
12
1101
101
1001
1102
1002

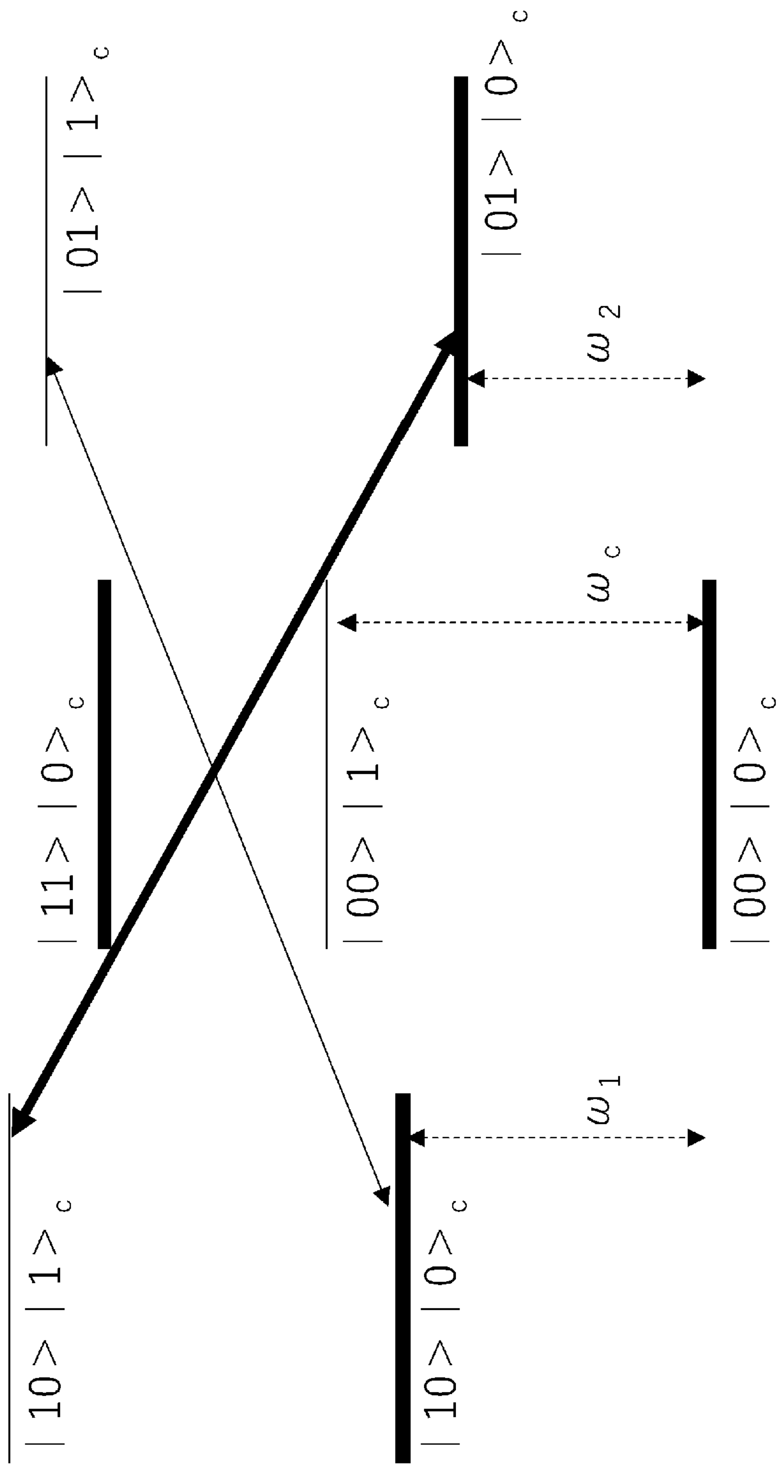
$|01\rangle|1\rangle_c$
$|01\rangle|0\rangle_c$
$\omega_2$
$|11\rangle|0\rangle_c$
$|00\rangle|1\rangle_c$
$\omega_c$
$|00\rangle|0\rangle_c$
$|10\rangle|1\rangle_c$
$|10\rangle|0\rangle_c$
$\omega_1$

FIG. 2

FIG. 3

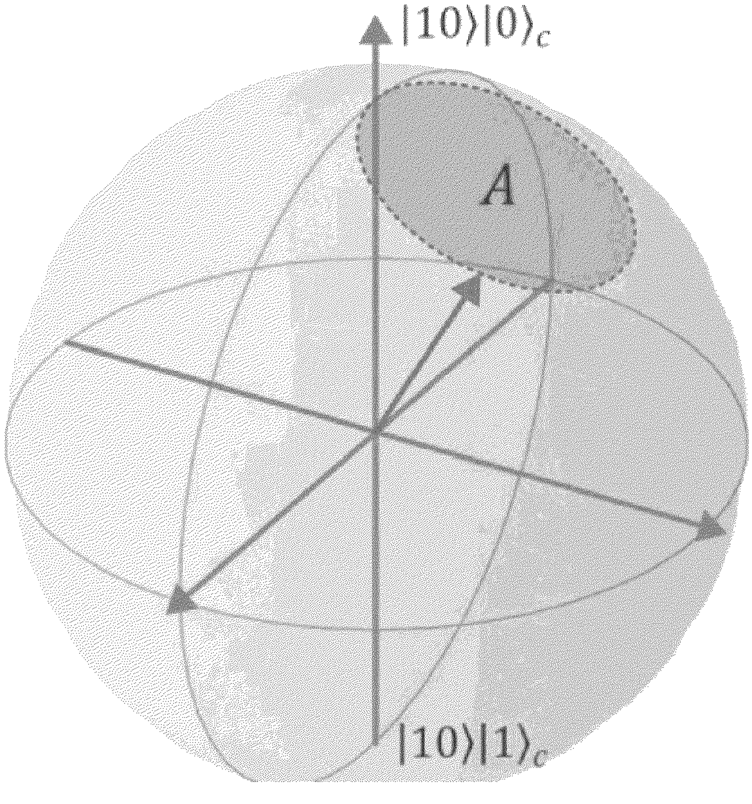

FIG. 4

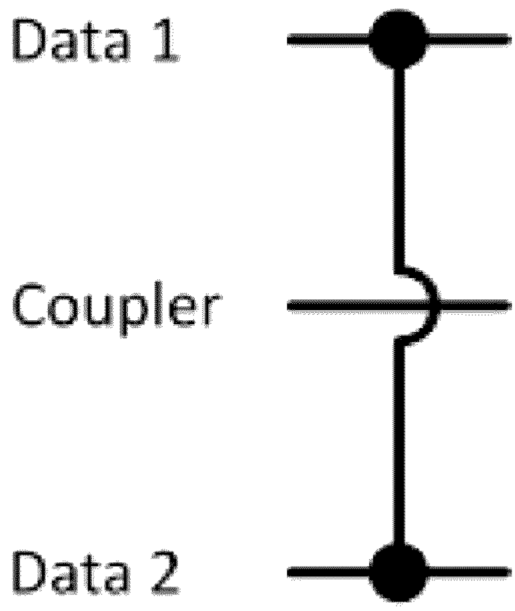

FIG. 5

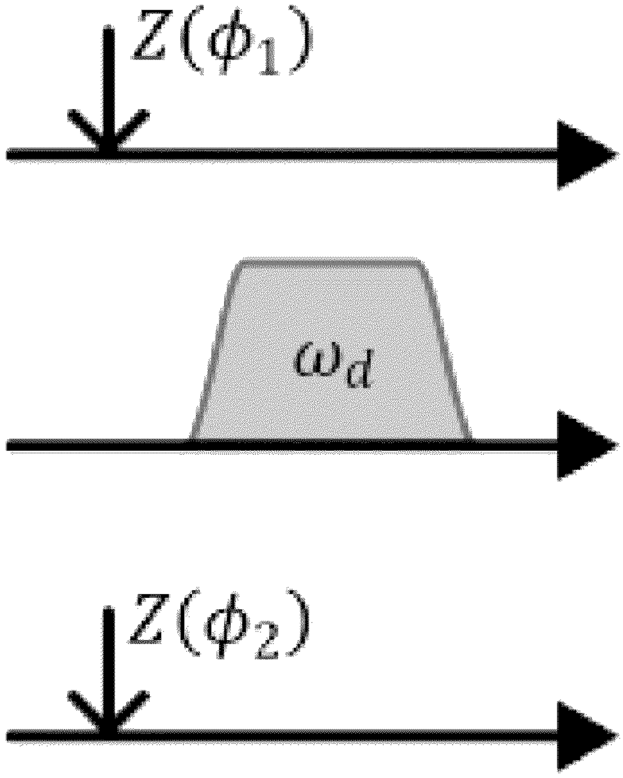

FIG. 6

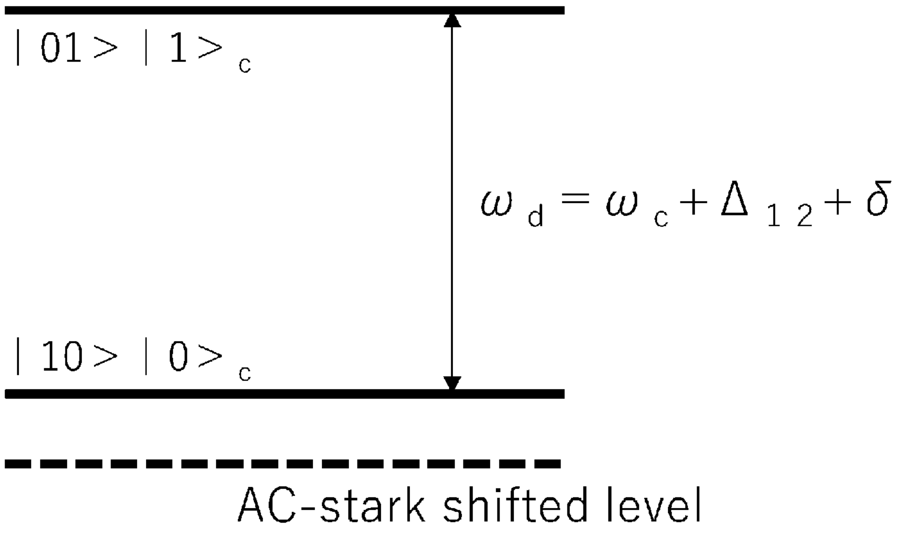

FIG. 7

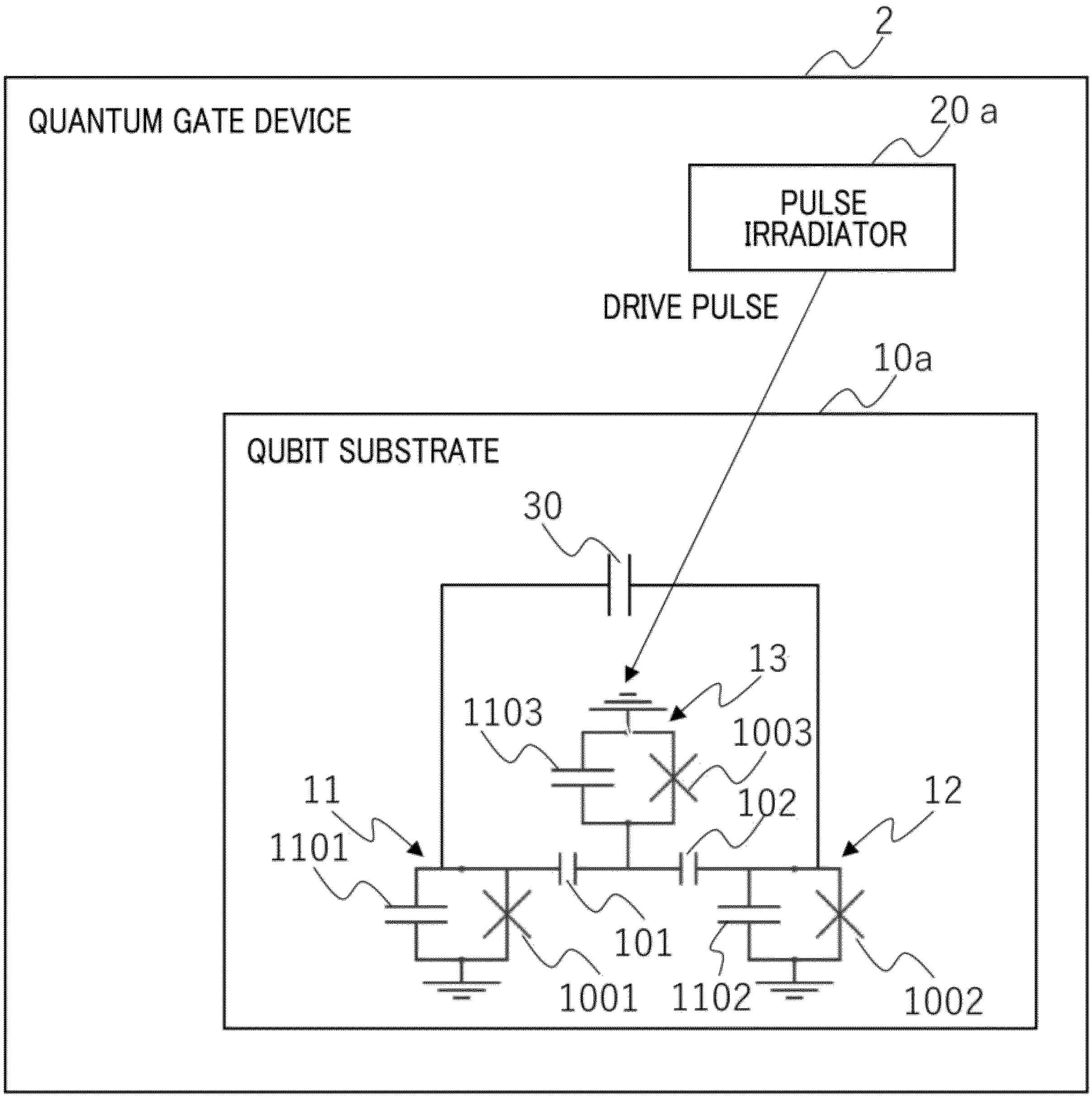
2
QUANTUM GATE DEVICE
20 a
PULSE IRRADIATOR
DRIVE PULSE
10a
QUBIT SUBSTRATE
30
13
1103
1003
11
102
12
1101
101
1001
1102
1002

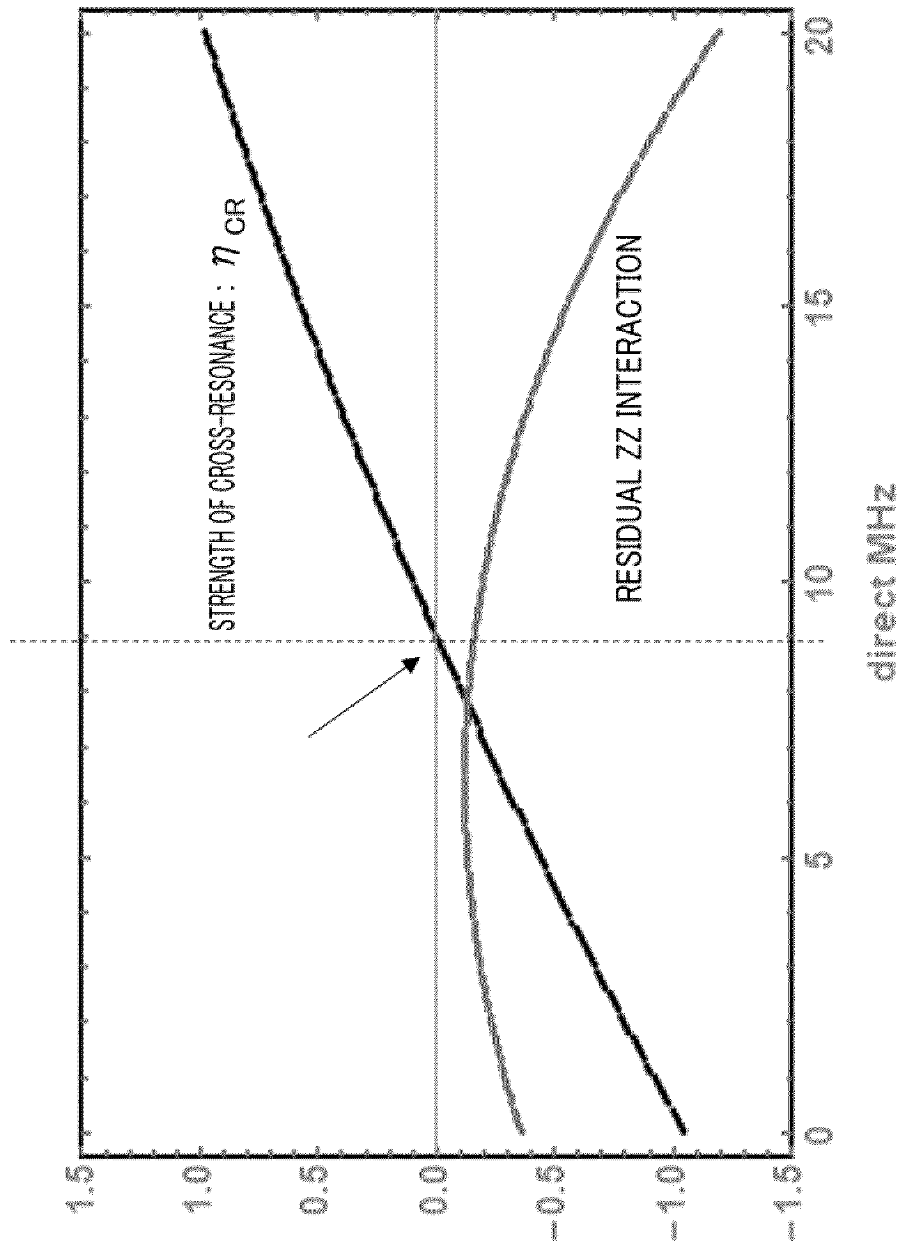
STRENGTH OF CROSS-RESONANCE : $\eta_{CR}$
RESIDUAL ZZ INTERACTION
direct MHz
$\eta$ cross resonance %, zz MHz
0
5
10
15
20
1.5
1.0
0.5
0.0
−0.5
−1.0
−1.5

FIG. 8

FIG. 9

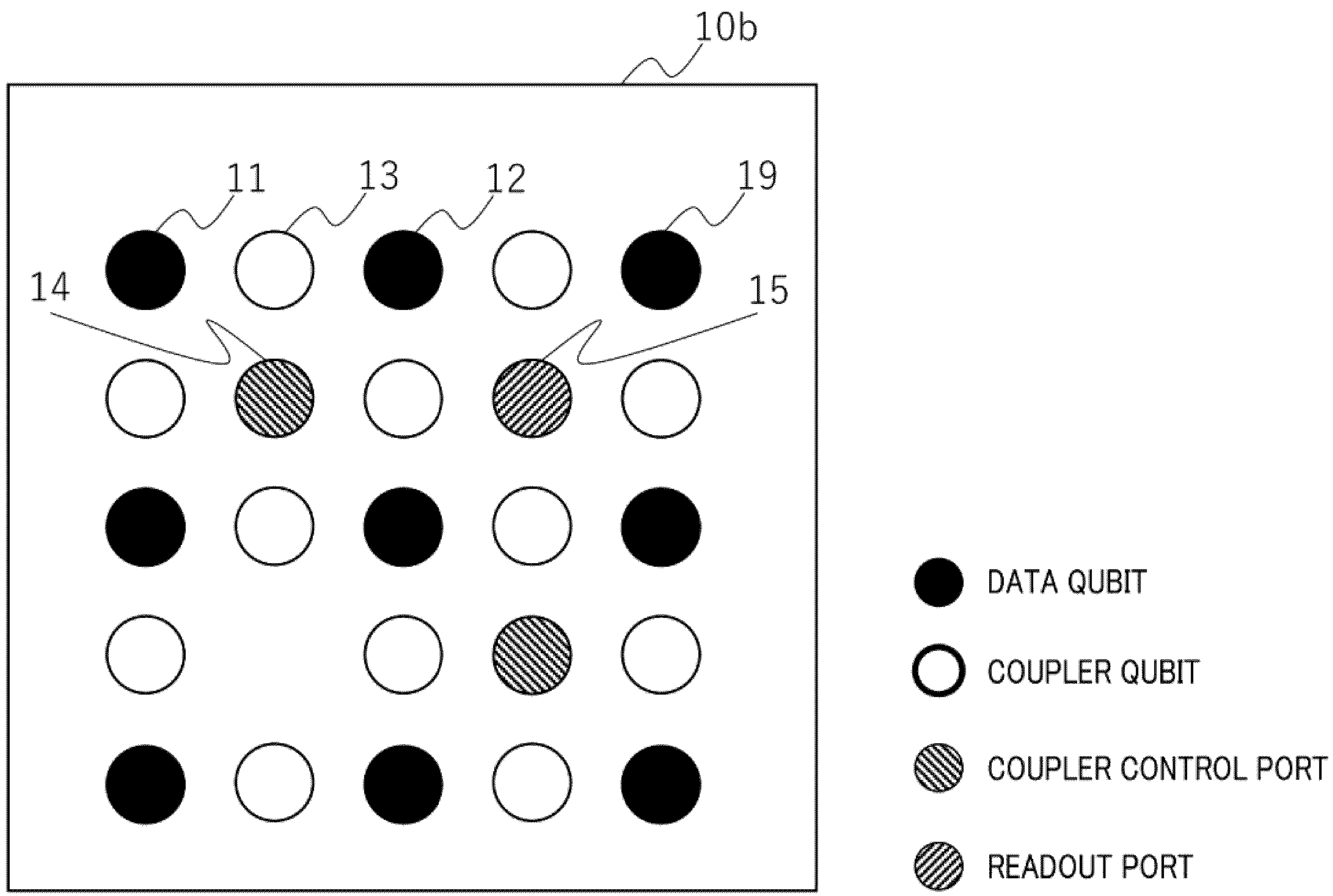
10b
11
13
12
19
14
15
DATA QUBIT
COUPLER QUBIT
COUPLER CONTROL PORT
READOUT PORT

FIG. 10

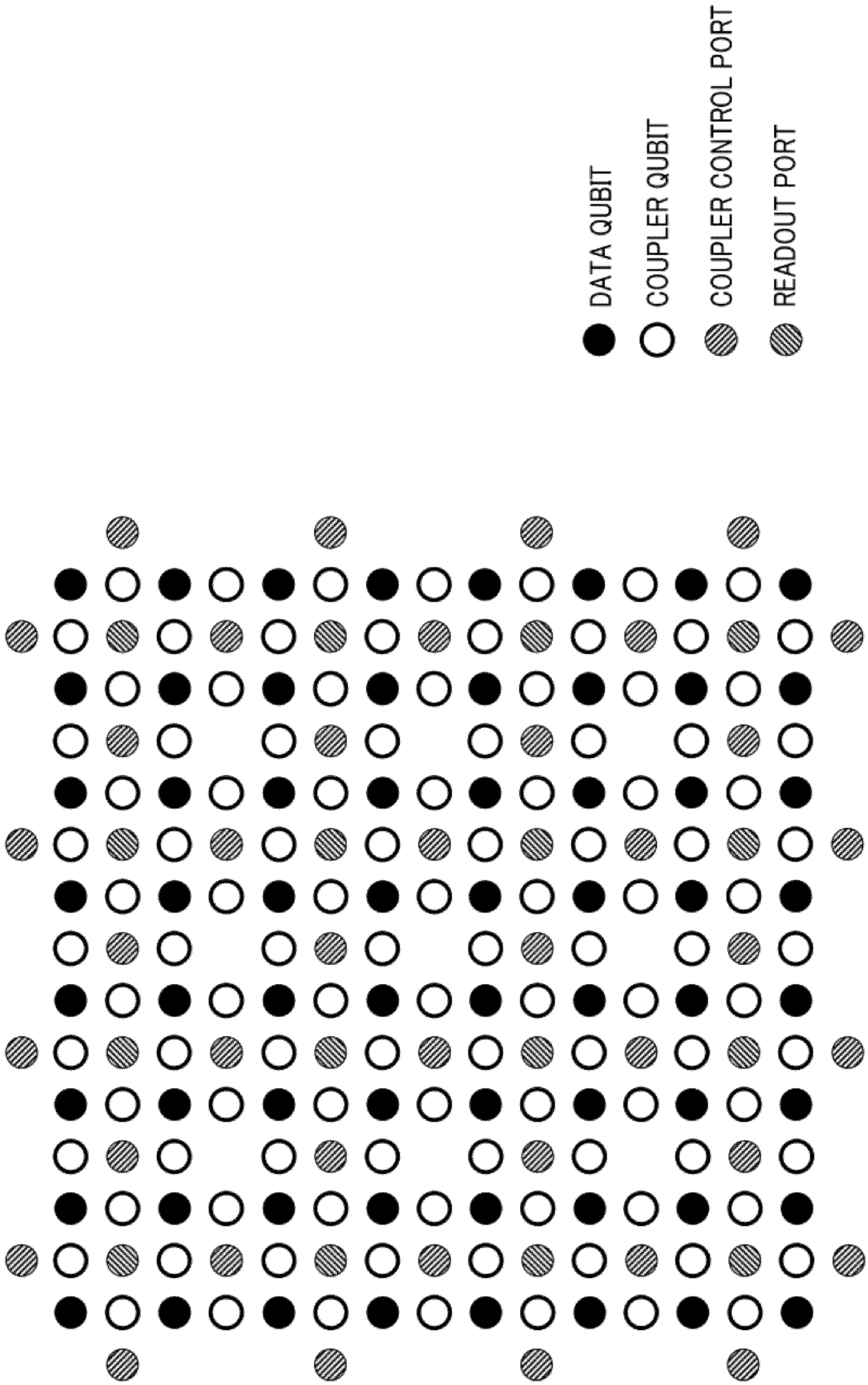
DATA QUBIT
COUPLER QUBIT
COUPLER CONTROL PORT
READOUT PORT

FIG. 11

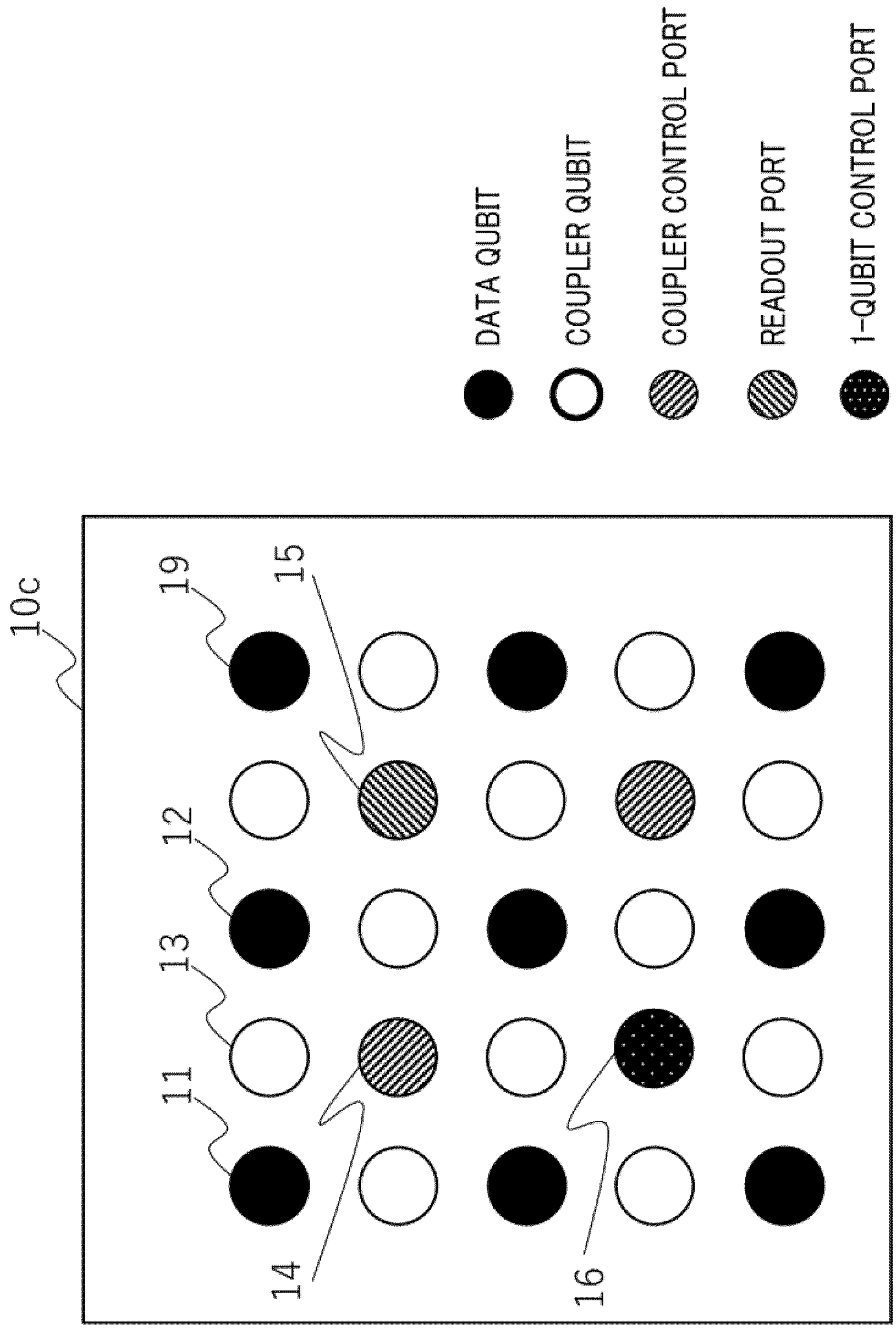
10c
11
12
13
14
15
16
19
DATA QUBIT
COUPLER QUBIT
COUPLER CONTROL PORT
READOUT PORT
1-QUBIT CONTROL PORT

FIG. 12

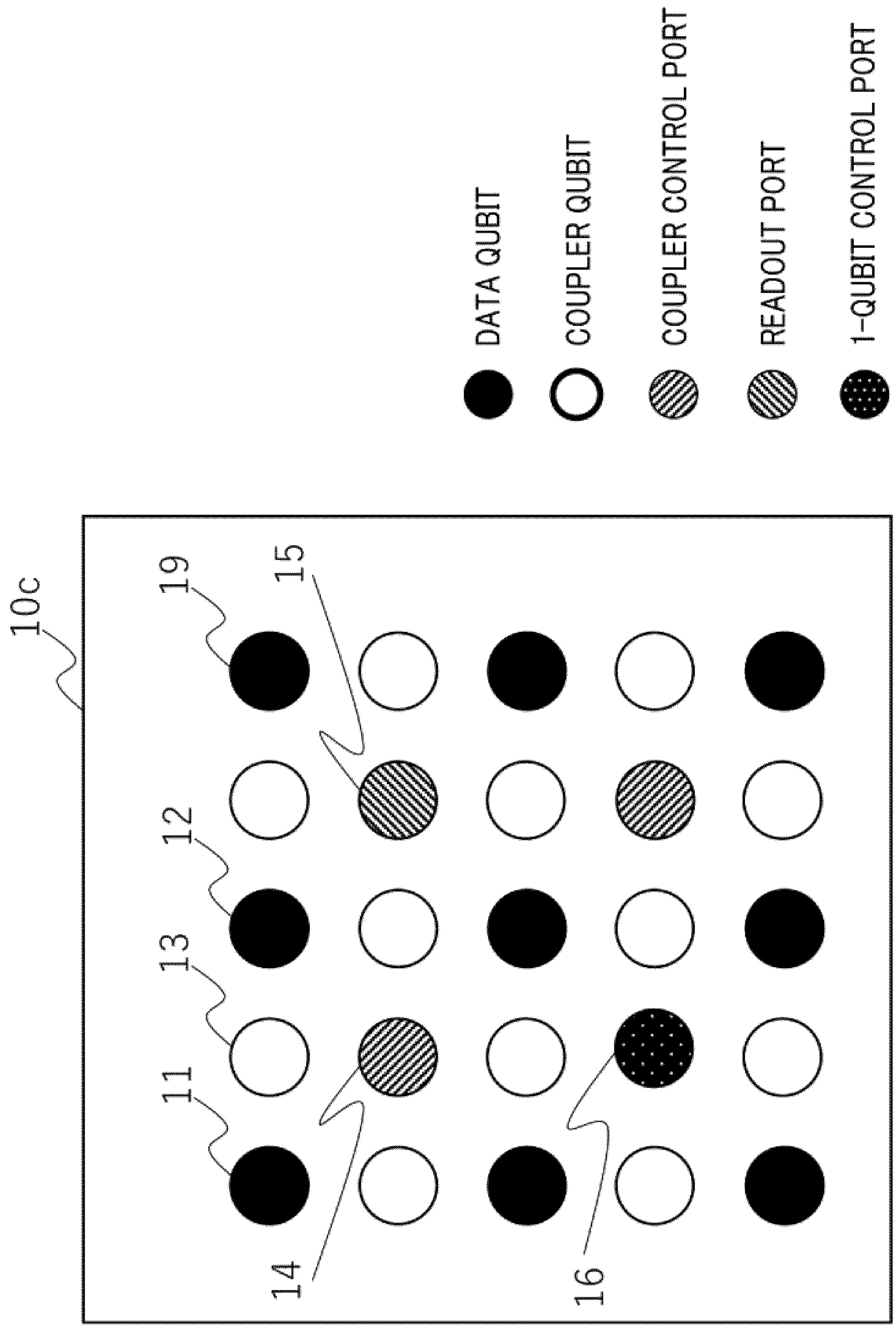
10c
11
12
13
14
15
16
19
DATA QUBIT
COUPLER QUBIT
COUPLER CONTROL PORT
READOUT PORT
1-QUBIT CONTROL PORT

FIG. 13

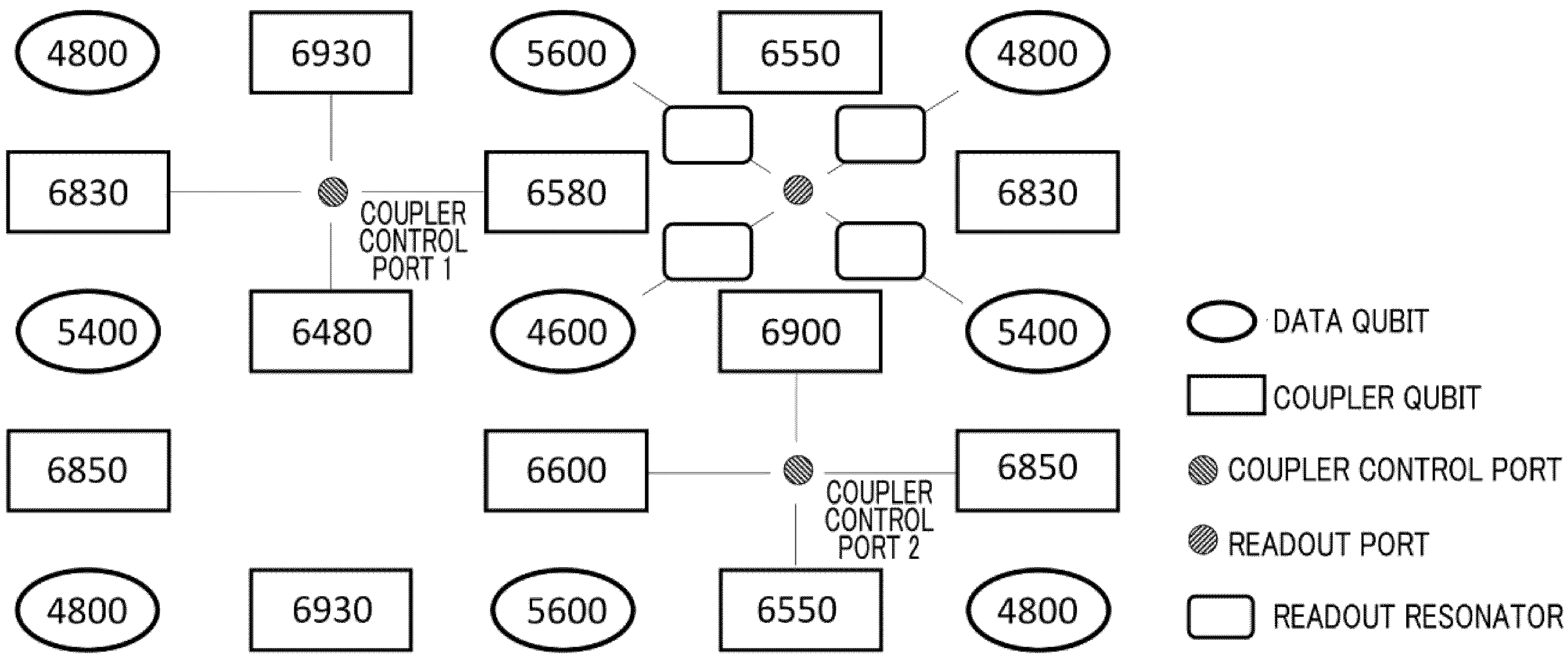
4800
6930
5600
6550
4800
6830
COUPLER
CONTROL
PORT 1
6580
6830
5400
6480
4600
6900
5400
6850
6600
COUPLER
CONTROL
PORT 2
6850
4800
6930
5600
6550
4800
DATA QUBIT
COUPLER QUBIT
COUPLER CONTROL PORT
READOUT PORT
READOUT RESONATOR

FIG. 14

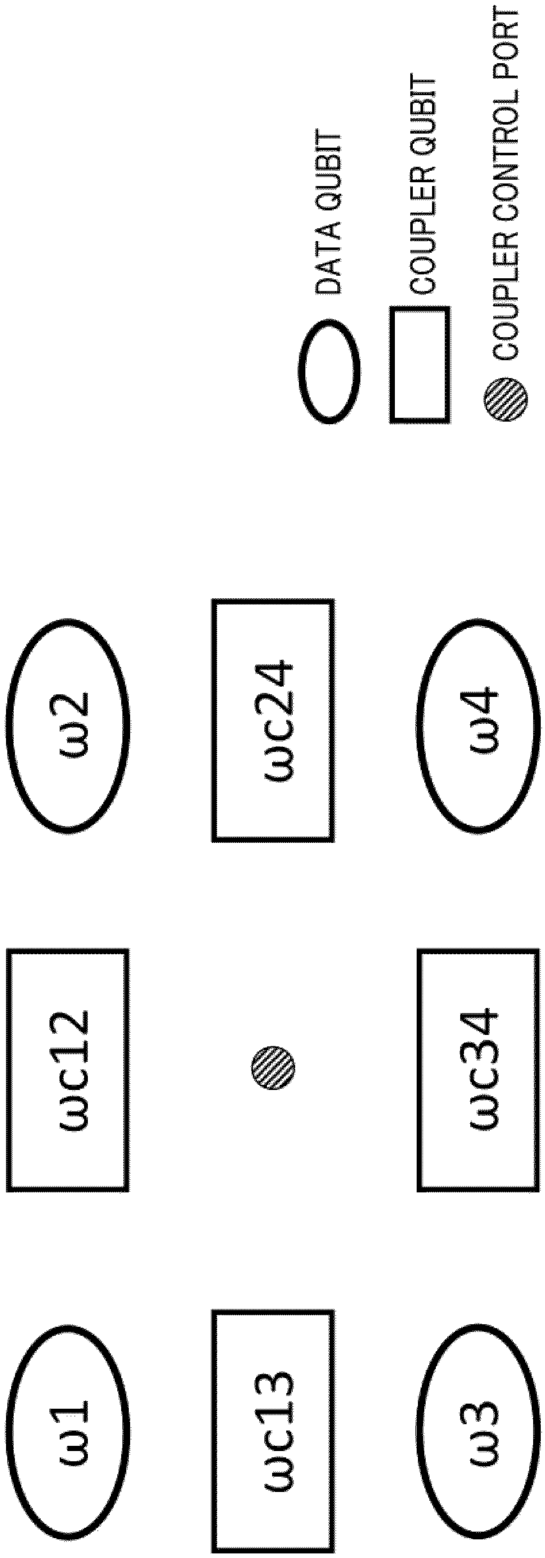

DATA QUBIT
COUPLER QUBIT
COUPLER CONTROL PORT
ω2
ωc24
ω4
ωc12
ωc34
ω1
ωc13
ω3

FIG. 15

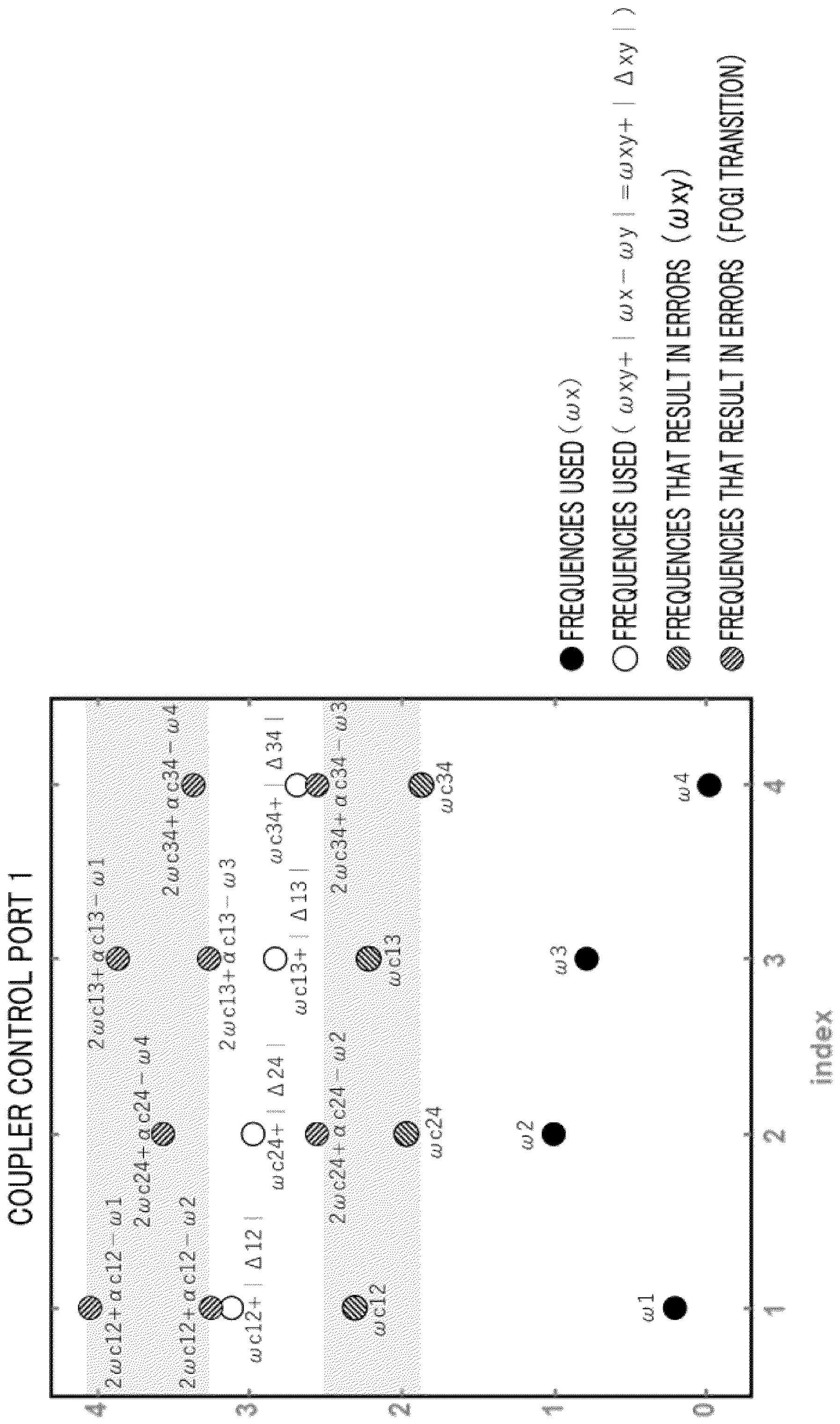
COUPLER CONTROL PORT 1
drive freq − ω4 GHz
index
0
1
2
3
4
1
2
3
4
ω1
ω2
ω3
ω4
ωc12
ωc24
ωc13
ωc34
ωc12+ |Δ12|
ωc24+ |Δ24|
ωc13+ |Δ13|
ωc34+ |Δ34|
2ωc12+αc12−ω1
2ωc12+αc12−ω2
2ωc24+αc24−ω4
2ωc24+αc24−ω2
2ωc13+αc13−ω1
2ωc13+αc13−ω3
2ωc34+αc34−ω4
2ωc34+αc34−ω3
FREQUENCIES USED (ωx)
FREQUENCIES USED (ωxy+ |ωx−ωy| =ωxy+ |Δxy|)
FREQUENCIES THAT RESULT IN ERRORS (ωxy)
FREQUENCIES THAT RESULT IN ERRORS (FOGI TRANSITION)

FIG. 16

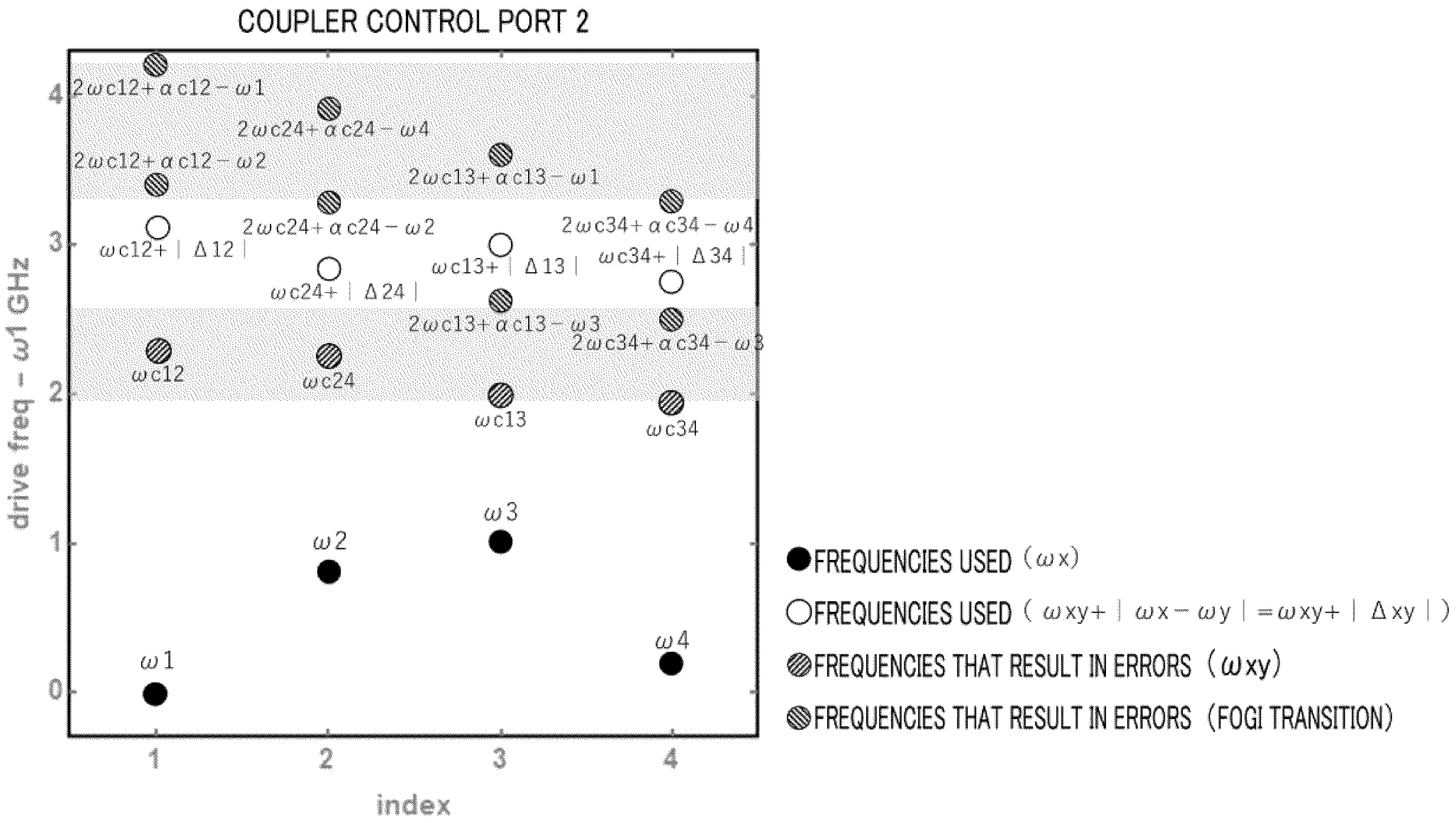
COUPLER CONTROL PORT 2
drive freq − ω1 GHz
index
0
1
2
3
4
1
2
3
4
2ωc12+αc12−ω1
2ωc12+αc12−ω2
ωc12+｜Δ12｜
ωc12
ω1
2ωc24+αc24−ω4
2ωc24+αc24−ω2
ωc24+｜Δ24｜
ωc24
ω2
2ωc13+αc13−ω1
ωc13+｜Δ13｜
2ωc13+αc13−ω3
ωc13
ω3
2ωc34+αc34−ω4
ωc34+｜Δ34｜
2ωc34+αc34−ω3
ωc34
ω4
FREQUENCIES USED（ωx）
FREQUENCIES USED（ωxy+｜ωx−ωy｜=ωxy+｜Δxy｜）
FREQUENCIES THAT RESULT IN ERRORS（ωxy）
FREQUENCIES THAT RESULT IN ERRORS（FOGI TRANSITION）

FIG. 17

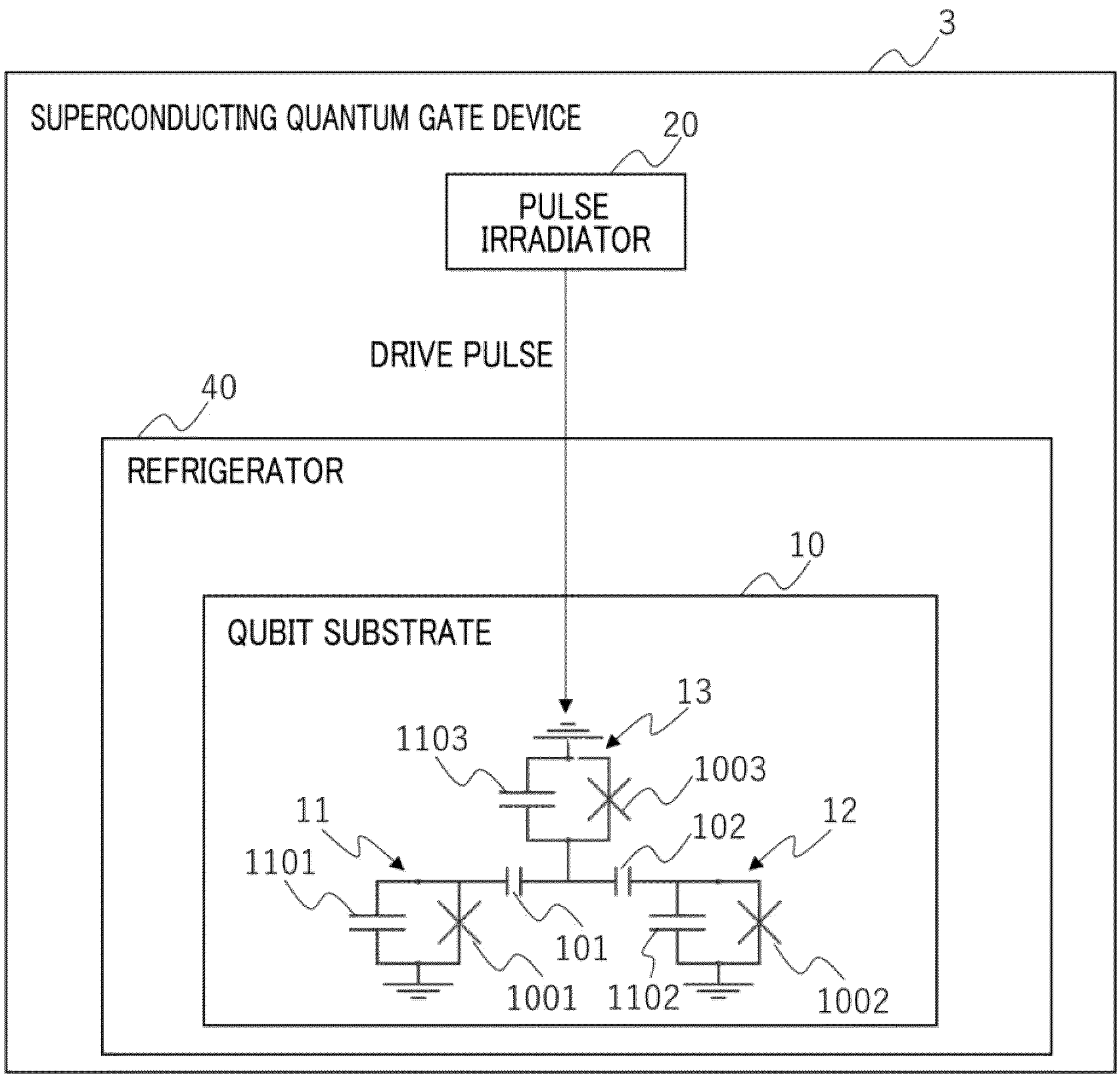
3
SUPERCONDUCTING QUANTUM GATE DEVICE
20
PULSE IRRADIATOR
DRIVE PULSE
40
REFRIGERATOR
10
QUBIT SUBSTRATE
13
1103
1003
11
102
12
1101
101
1001
1102
1002

FIG. 18

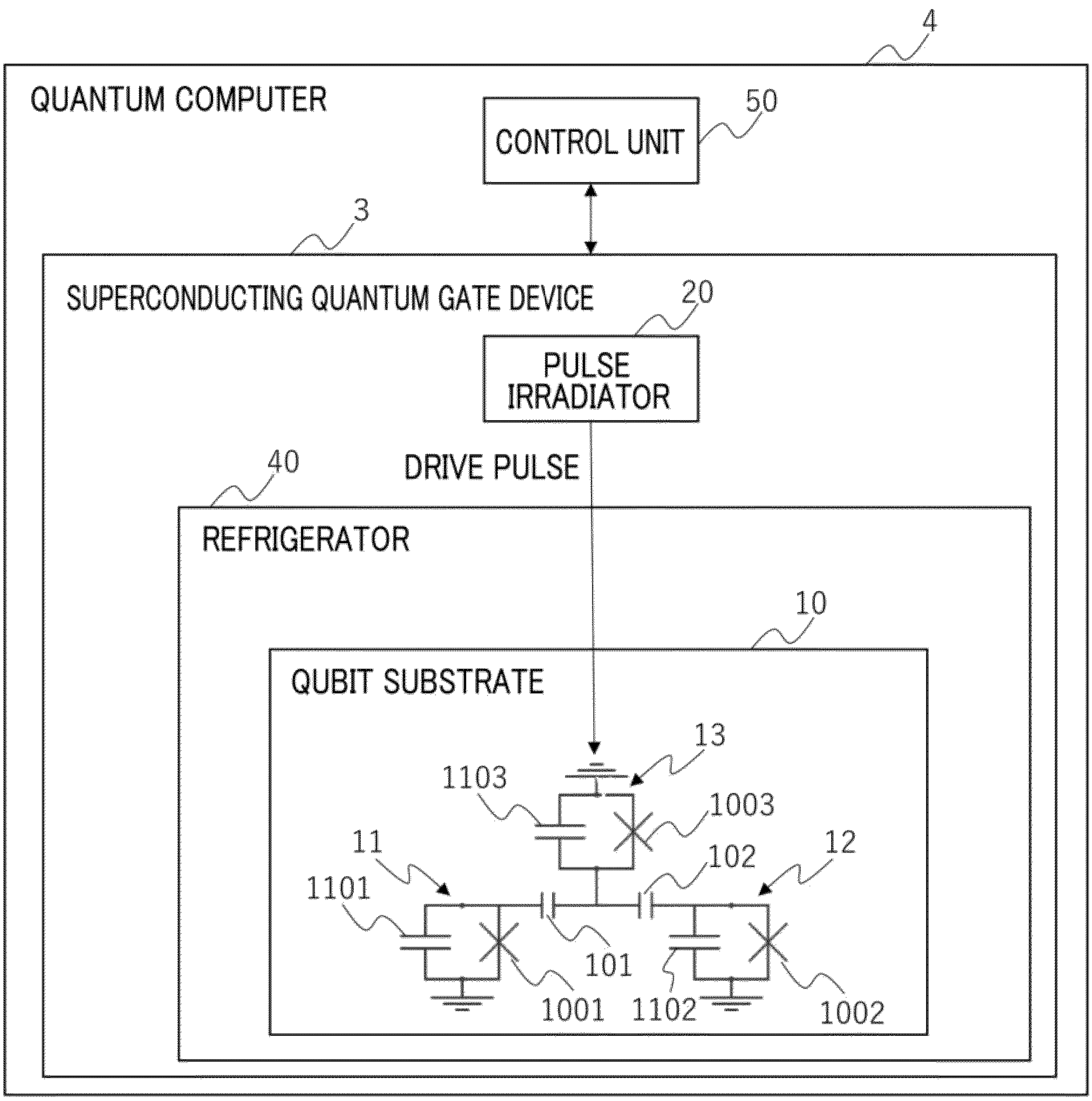
4
QUANTUM COMPUTER
CONTROL UNIT
50
3
SUPERCONDUCTING QUANTUM GATE DEVICE
20
PULSE IRRADIATOR
DRIVE PULSE
40
REFRIGERATOR
10
QUBIT SUBSTRATE
13
1103
1003
11
102
12
1101
101
1001
1102
1002

FIG. 19

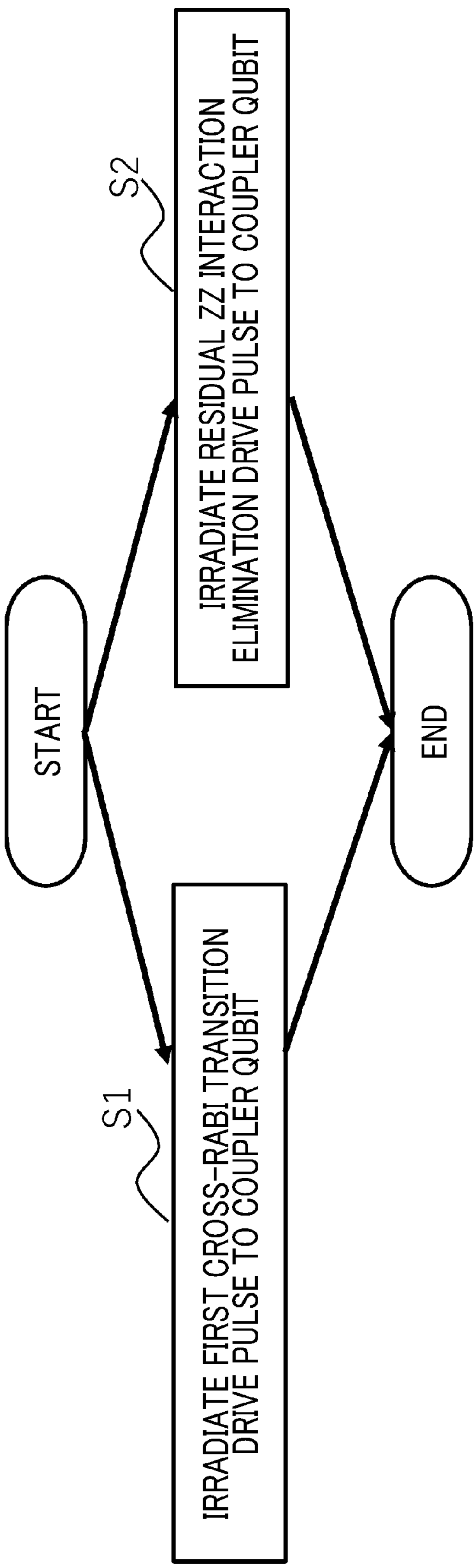
START
S1
IRRADIATE FIRST CROSS-RABI TRANSITION DRIVE PULSE TO COUPLER QUBIT
S2
IRRADIATE RESIDUAL ZZ INTERACTION ELIMINATION DRIVE PULSE TO COUPLER QUBIT
END

FIG. 20

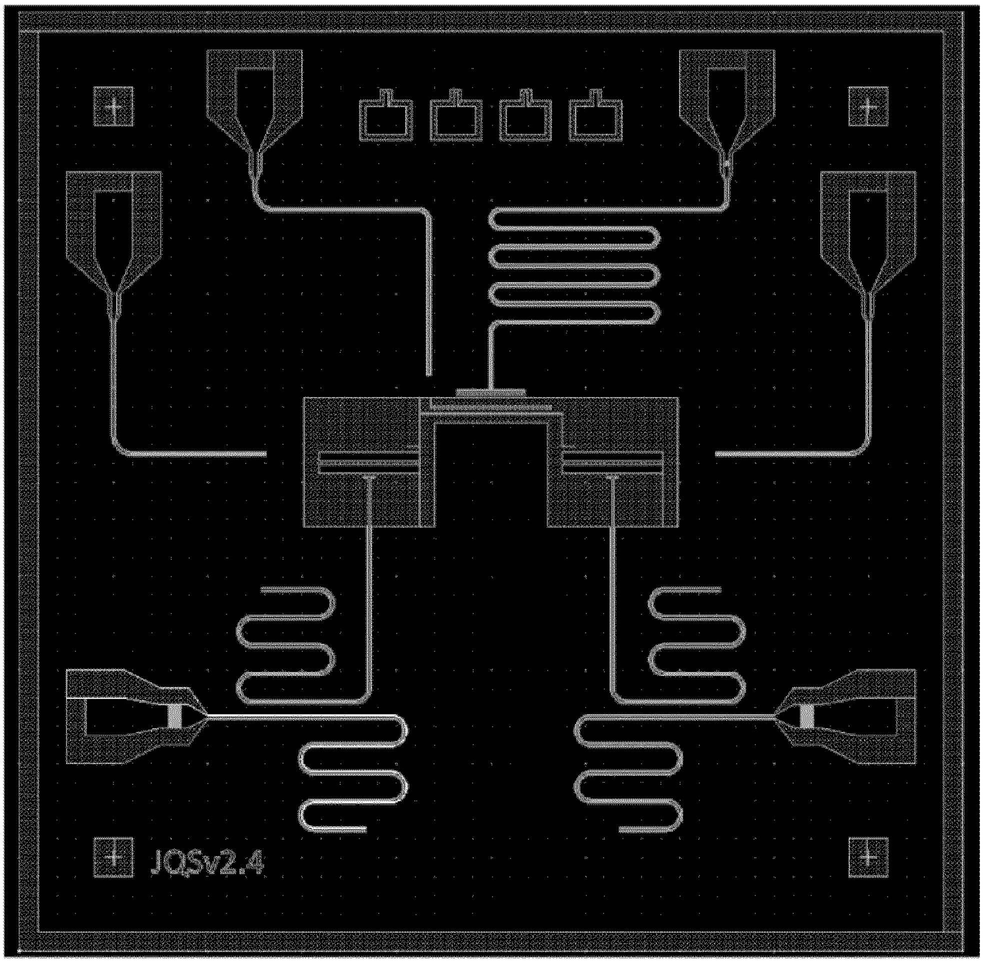

FIG. 21

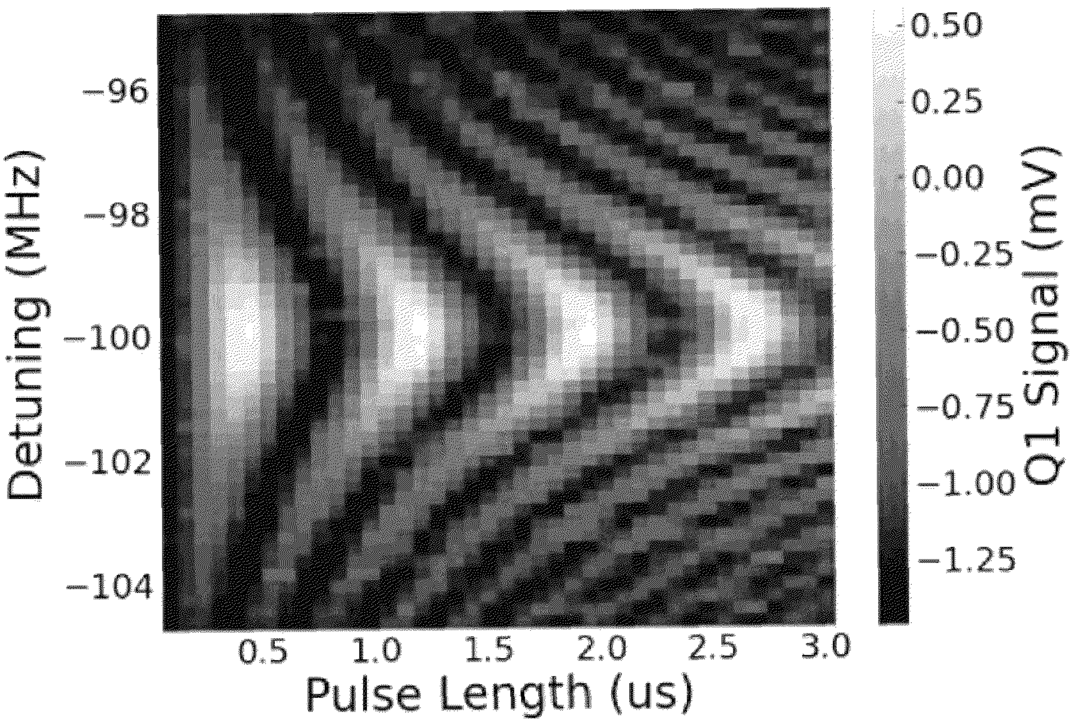
-96
-98
-100
-102
-104
Detuning (MHz)
0.5
1.0
1.5
2.0
2.5
3.0
Pulse Length (us)
0.50
0.25
0.00
-0.25
-0.50
-0.75
-1.00
-1.25
Q1 Signal (mV)

FIG. 22

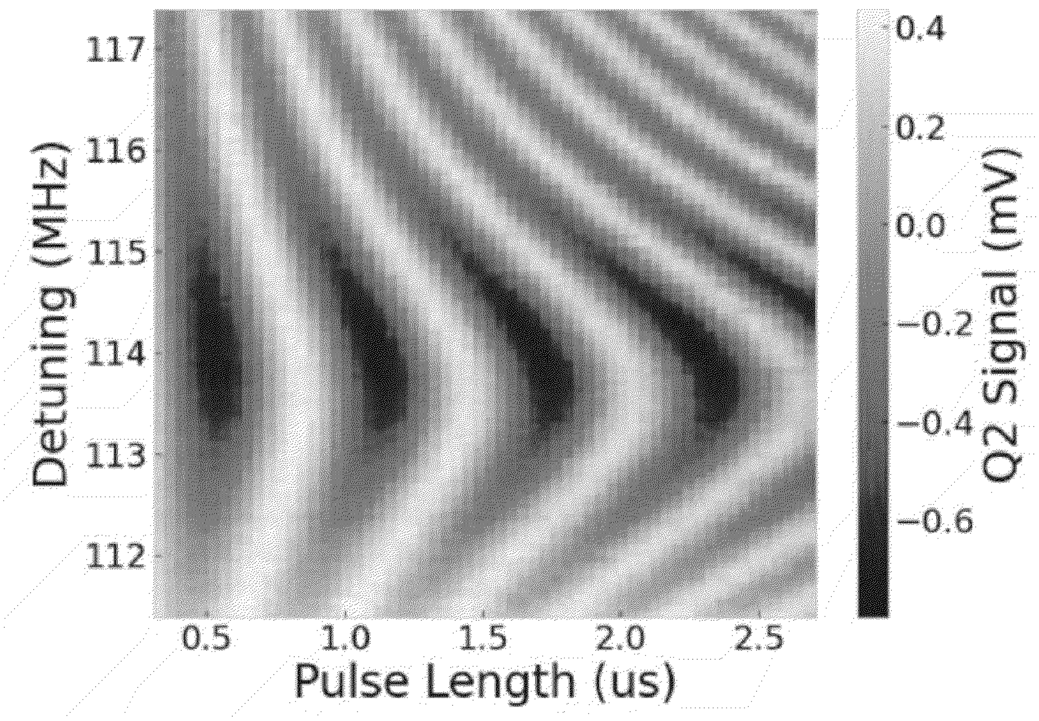
117
116
115
114
113
112
Detuning (MHz)
0.5
1.0
1.5
2.0
2.5
Pulse Length (us)
0.4
0.2
0.0
−0.2
−0.4
−0.6
Q2 Signal (mV)

FIG. 23

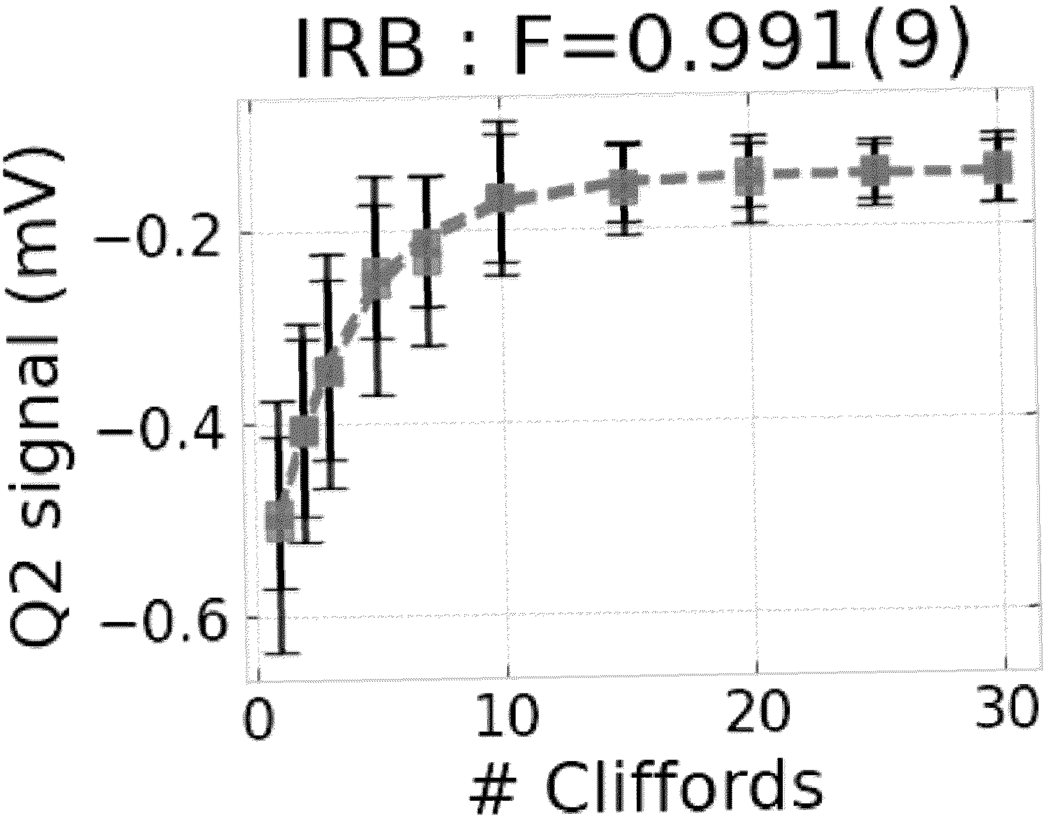

FIG. 24

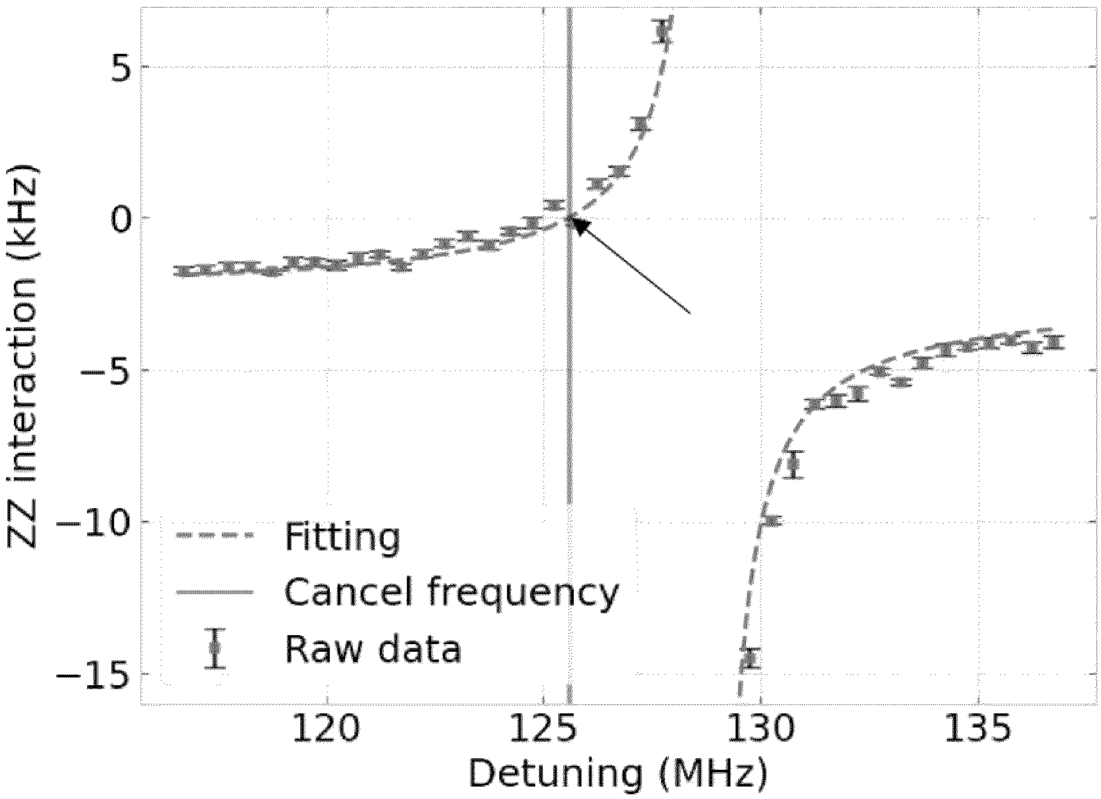
5
0
−5
−10
−15
ZZ interaction (kHz)
120
125
130
135
Detuning (MHz)
Fitting
Cancel frequency
Raw data

**INTERNATIONAL SEARCH REPORT**

International application No. **PCT/JP2023/033341**

**A. CLASSIFICATION OF SUBJECT MATTER**

***G06N 10/40***(2022.01)i; ***G06F 7/38***(2006.01)i; ***H10N 60/10***(2023.01)i
FI: G06N10/40; H10N60/10 K; G06F7/38 510; G06F7/38 610

According to International Patent Classification (IPC) or to both national classification and IPC

**B. FIELDS SEARCHED**

Minimum documentation searched (classification system followed by classification symbols)

G06N10/40; G06F7/38; H10N60/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | US 2021/0406746 A1 (INTERNATIONAL BUSINESS MACHINES CORPORATION) 30 December 2021 (2021-12-30)<br>paragraphs [0031], [0044], fig. 1 | 1-17 |
| A | US 2021/0408112 A1 (INTERNATIONAL BUSINESS MACHINES CORPORATION) 30 December 2021 (2021-12-30)<br>paragraphs [0033], [0047], fig. 1A, 1B | 1-17 |
| A | US 10924095 B1 (INTERNATIONAL BUSINESS MACHINES CORPORATION) 16 February 2021 (2021-02-16)<br>p. 1, left column, lines 44-48 | 1-17 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 November 2023** | **14 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/033341**

| Patent document cited in search report | Publication date (day/month/year) | Patent family member(s) | Publication date (day/month/year) |
|---|---|---|---|
| US 2021/0406746 A1 | 30 December 2021 | CN 115699034 A<br>paragraphs [0031], [0046], fig. 1 | |
| US 2021/0408112 A1 | 30 December 2021 | CN 115699582 A<br>paragraphs [0030], [0044], fig. 1A, 1B | |
| US 10924095 B1 | 16 February 2021 | CN 115885293 A<br>paragraph [0004] | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **YASUNOBU NAKAMURA**. Progress and Applications of Superconducting Quantum Bit Research. *Applied Physics*, 2021, vol. 90 (4), https://www.jstage.jst.go.jp/article/oubutsu/90/4/90_209/_pdf
- **DAVID C. MCKAY**. *Phys. Rev. Applied*, 2016, vol. 6, 064007, https://arxiv.org/pdf/1604.03076.pdf